(19) Europäisches Patentamt / European Patent Office / Office européen des brevets

(11) **EP 3 230 028 B1**

(12) **EUROPÄISCHE PATENTSCHRIFT**

(45) Veröffentlichungstag und Bekanntmachung des Hinweises auf die Patenterteilung:
**09.01.2019 Patentblatt 2019/02**

(21) Anmeldenummer: **15808140.6**

(22) Anmeldetag: **09.12.2015**

(51) Int Cl.:
**B27N 3/00** *(2006.01)*        **B27N 3/18** *(2006.01)*
**B27N 3/24** *(2006.01)*        **B27N 3/02** *(2006.01)*

(86) Internationale Anmeldenummer:
**PCT/EP2015/079050**

(87) Internationale Veröffentlichungsnummer:
**WO 2016/091918 (16.06.2016 Gazette 2016/24)**

(54) **VERFAHREN ZUR HERSTELLUNG VON EIN- ODER MEHRSCHICHTIGEN LIGNOCELLULOSEWERKSTOFFEN DURCH AUSHÄRTEN IN EINEM HOCHFREQUENTEN ELEKTRISCHEN FELD**

METHOD FOR PRODUCING SINGLE OR MULTI-LAYER LIGNOCELLULOSE MATERIALS BY HARDENING IN A HIGH FREQUENCY ELECTRIC FIELD

PROCÉDÉ DE FABRICATION D'UN MATÉRIAU EN LIGNOCELLULOSE MONO-COUCHE OU MULTICOUCHES PAR DURCISSEMENT DANS UN CHAMP ÉLECTRIQUE HAUTE FRÉQUENCE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **09.12.2014 EP 14197060**

(43) Veröffentlichungstag der Anmeldung:
**18.10.2017 Patentblatt 2017/42**

(73) Patentinhaber: **BASF SE**
**67056 Ludwigshafen am Rhein (DE)**

(72) Erfinder:
• **WEINKOETZ, Stephan**
  **67434 Neustadt (DE)**
• **KRUG, Detlef**
  **01277 Dresden (DE)**
• **MAEBERT, Marco**
  **01665 Klipphausen (DE)**

(74) Vertreter: **BASF IP Association**
**BASF SE**
**G-FLP-C006**
**67056 Ludwigshafen (DE)**

(56) Entgegenhaltungen:
WO-A1-92/01540        WO-A1-97/28936
WO-A1-2009/080748        WO-A1-2012/080338
WO-A1-2013/092817        CH-A5- 583 273
DE-A1- 10 315 922

• PEREIRA C M C ET AL: "High frequency heating of medium density fiberboard (MDF): theory and experiment", CHEMICAL ENGINEERING SCIENCE, OXFORD, GB, Bd. 59, Nr. 4, 1. Februar 2004 (2004-02-01), Seiten 735-745, XP004492729, ISSN: 0009-2509, DOI: 10.1016/J.CES.2003.09.038

EP 3 230 028 B1

**Beschreibung**

Die vorliegende Erfindung betrifft ein Verfahren zur Herstellung von ein- oder mehrschichtigen Lignocellulosewerkstoffen durch Aushärten in einem hochfrequenten elektrischen Feld.

Aus der WO-A-97/28936 ist bekannt, dass lignocellulosehaltige Teilchen zu einer Matte gestreut, die anschließend vorverdichtet, beim Vorverdichten mittels Hochfrequenzenergie erwärmt und schließlich in einer Heißpresse zu einer Platte gepresst wird. Nachteilig an diesem Verfahren ist, dass für die Endverdichtung zum fertigen plattenförmigen Holzwerkstoff zusätzlich zum Vorverdichtungsschritt, bei dem mittels Hochfrequenz erwärmt wird, ein weiterer Verdichtungsschritt in einer Heißpresse benötigt wird.

Aus DE-C-31 07 589 ist eine Vorrichtung bekannt, die zur Vorwärmung einer Matte aus beleimten Holzfasern mittels Hochfrequenz bei der Herstellung von Holzfaserplatten verwendet werden kann. Die Hochfrequenz-Heizeinrichtung erwärmt die Matte auf 40 bis 80°C. Danach wird die Matte in einer beheizten Presse zu Ende gepresst.

Aus der DE-C-29 08 470 ist eine Vorrichtung zur diskontinuierlichen Herstellung von Span- oder Faserplatten bekannt, in der eine Hochfrequenzheizeinrichtung so eingebaut ist, dass die noch nicht vollständig gestreute Matte (zum Zeitpunkt der Energieeintragung ist nur die untere Deckschicht und die Mittelschicht gestreut) beim Rückfahrvorgang der Streueinheit während der Verpressung eines vorangehenden Vliesabschnitts, erwärmt wird. Dabei wird die Energie vor allem in die Mittelschicht eingetragen. Anschließend wird die obere Deckschicht darüber gestreut. Dabei dient die untere Deckschicht als Isolation. Nachteilig an diesem Verfahren ist, dass für die Endverdichtung zum fertigen plattenförmigen Holzwerkstoff zusätzlich zum Vorverdichtungsschritt, bei dem mittels Hochfrequenz erwärmt wird, ein weiterer Verdichtungsschritt in einer Heißpresse benötigt wird.

In der DE-A-31 07 592 ist ein Verfahren zur Herstellung von Span- oder Faserplatten beschrieben, bei dem nach der Erwärmung der gestreuten Span- bzw. Fasermatte mittels Hochfrequenzenergie ein Verdichtungsschritt unter Zuführung weiterer Wärmeenergie in einer Heißpresse durchgeführt wird.

DE-A1-10315922 offenbart ein Verfahren zur Herstellung von Plattenwerkstoffen, wobei eine Holzspanmatte in einer Presse unter Druck und Wärme gepresst und ausgehärtet wird.

Alle diese Verfahren haben verfahrenstechnische Nachteile.

Demgemäß wurde ein neues und verbessertes Verfahren zur diskontinuierlichen oder kontinuierlichen, bevorzugt kontinuierlichen Herstellung von einschichtigen plattenförmiger Lignocellulosewerkstoffen oder von mehrschichtigen plattenförmiger Lignocellulosewerkstoffen mit einem Kern und mindestens einer oberen und einer unteren Deckschicht

enthaltend die Verfahrensschritte

a) Mischen der Komponenten der einzelnen Schicht(en),
b) Schichtweises Streuen der Mischungen zu einer Matte,
c) Verdichtung nach dem Streuen der einzelnen Schicht(en),
d) Anlegen eines hochfrequenten elektrischen Feldes während und/oder nach der Verdichtung und thermische Aushärtung des/der Bindemittel(s),
e) anschließend gegebenenfalls Heißpressen und
f) Abkühlen des Lignocellulosewerkstoffes

gefunden, wobei man im Verfahrensschritt a)
für den Kern bzw. die einzige Schicht die Lignocellulosepartikel A) [Komponente A)] mit

B) 0 bis 25 Gew.-% expandierte Kunststoffteilchen mit der Schüttdichte im Bereich von 10 bis 150 kg/m$^3$ [Komponente B)],
C) 1 bis 15 Gew.-% eines oder mehrerer Bindemittel ausgewählt aus der Gruppe bestehend aus Aminoplastharz und organischem Isocyanat mit mindestens zwei Isocyanatgruppen [Komponente C)],
D) 0 bis 3 Gew.-% Ammoniumsalze [Komponente D)],
E) 0 bis 5 Gew.-% Additive [Komponente E)] und
F) 0,1 bis 3 Gew.-% Alkali- oder Erdalkalisalze aus der Gruppe der Sulfate, Nitrate, Halogenide oder deren Gemische [Komponente F)],

ggf. für die Deckschichten die Lignocellulosepartikel G) [Komponente G)] mit

H) 1 bis 15 Gew.-% eines oder mehrerer Bindemittel ausgewählt aus der Gruppe bestehend aus Aminoplastharz und organischem Isocyanat mit mindestens zwei Isocyanatgruppen [Komponente H)],
I) 0 bis 2 Gew.-% Ammoniumsalze [Komponente I)],
J) 0 bis 5 Gew.-% Additive [Komponente J)] und

K) 0,1 bis 3 Gew.-% Alkali- oder Erdalkalisalze aus der Gruppe der Sulfate, Nitrate, Halogenide oder deren Gemische [Komponente K)]

vermischt, welches dadurch charakterisiert ist, dass zum Zeitpunkt Z die Schicht des Kerns bzw. die einzige Schicht eine Temperatur von mindestens 90°C aufweist und diese Temperatur in weniger als 40 s/mm • d ab dem Anlegen des hochfrequenten elektrischen Feldes erreicht wird, wobei d die Dicke des plattenförmigen Lignocellulosewerkstoffes in mm zum Zeitpunkt Z ist, ein- oder mehrschichtige Lignocellulosewerkstoffe, hergestellt durch ein Verfahren zur diskontinuierlichen oder kontinuierlichen, bevorzugt kontinuierlichen Herstellung von einschichtigen plattenförmigen Lignocellulosewerkstoffen oder von mehrschichtigen plattenförmigen Lignocellulosewerkstoffen mit einem Kern und mindestens einer oberen und einer unteren Deckschicht enthaltend die Verfahrensschritte

a) Mischen der Komponenten der einzelnen Schicht(en),
b) Schichtweises Streuen der Mischungen zu einer Matte,
c) Verdichtung nach dem Streuen der einzelnen Schicht(en),
d) Anlegen eines hochfrequenten elektrischen Feldes während und/oder nach der Verdichtung und thermische Aushärtung des/der Bindemittel(s),
e) anschließend gegebenenfalls Heißpressen und
f) Abkühlen des Lignocellulosewerkstoffes

gefunden, wobei man im Verfahrensschritt a)
für den Kern bzw. die einzige Schicht die Lignocellulosepartikel A) [Komponente A)] mit

B) 0 bis 25 Gew.-% expandierte Kunststoffteilchen mit der Schüttdichte im Bereich von 10 bis 150 kg/m$^3$ [Komponente B)],
C) 1 bis 15 Gew.-% eines oder mehrerer Bindemittel ausgewählt aus der Gruppe bestehend aus Aminoplastharz und organischem Isocyanat mit mindestens zwei Isocyanatgruppen [Komponente C)],
D) 0 bis 3 Gew.-% Ammoniumsalze [Komponente D)],
E) 0 bis 5 Gew.-% Additive [Komponente E)] und
F) 0,1 bis 3 Gew.-% Alkali- oder Erdalkalisalze aus der Gruppe der Sulfate, Nitrate, Halogenide oder deren Gemische [Komponente F)],

ggf. für die Deckschichten die Lignocellulosepartikel G) [Komponente G)] mit

H) 1 bis 15 Gew.-% eines oder mehrerer Bindemittel ausgewählt aus der Gruppe bestehend aus Aminoplastharz und organischem Isocyanat mit mindestens zwei Isocyanatgruppen [Komponente H)],
I) 0 bis 2 Gew.-% Ammoniumsalze [Komponente I)],
J) 0 bis 5 Gew.-% Additive [Komponente J)] und
K) 0,1 bis 3 Gew.-% Alkali- oder Erdalkalisalze aus der Gruppe der Sulfate, Nitrate, Halogenide oder deren Gemische [Komponente K)]

vermischt, welches dadurch charakterisiert ist, dass zum Zeitpunkt Z die Schicht des Kerns bzw. die einzige Schicht eine Temperatur von mindestens 90°C aufweist und diese Temperatur in weniger als 40 s/mm • d ab dem Anlegen des hochfrequenten elektrischen Feldes erreicht wird, wobei d die Dicke des plattenförmigen Lignocellulosewerkstoffes in mm zum Zeitpunkt Z ist, sowie ein- oder mehrschichtige Lignocellulosewerkstoffe mit einem Kern und gegebenenfalls mindestens einer oberen und einer unteren Deckschicht gefunden, in denen der Kern bzw. die einzige Schicht bezogen auf die Lignocellulosepartikel A) [Komponente A)] die Komponenten

G) 0 bis 25 Gew.-% expandierte Kunststoffteilchen mit der Schüttdichte im Bereich von 10 bis 150 kg/m$^3$ [Komponente B)],
H) 1 bis 15 Gew.-% eines oder mehrerer Bindemittel ausgewählt aus der Gruppe bestehend aus Aminoplastharz und organischem Isocyanat mit mindestens zwei Isocyanatgruppen [Komponente C)],
I) 0 bis 3 Gew.-% Ammoniumsalze [Komponente D)],
J) 0 bis 5 Gew.-% Additive [Komponente E)] und
K) 0,1 bis 3 Gew.-% Alkali- oder Erdalkalisalze aus der Gruppe der Sulfate, Nitrate, Halogenide oder deren Gemische [Komponente F)],

und ggf. für die Deckschichten bezogen auf die Lignocellulosepartikel G) [Komponente G)] die Komponenten

H) 1 bis 15 Gew.-% eines oder mehrerer Bindemittel ausgewählt aus der Gruppe bestehend aus Aminoplastharz und organischem Isocyanat mit mindestens zwei Isocyanatgruppen [Komponente H)],

I) 0 bis 2 Gew.-% Ammoniumsalze [Komponente I)],

J) 0 bis 5 Gew.-% Additive [Komponente J)] und

K) 0,1 bis 3 Gew.-% Alkali- oder Erdalkalisalze aus der Gruppe der Sulfate, Nitrate, Halogenide oder deren Gemische [Komponente K)]

enthalten.

Die Angaben der Gew.-% der Komponenten B) bis F) sind die Gewichte der jeweiligen Komponente bezogen auf das Trockengewicht der Lignocellulosepartikel A) [Komponente A)]. Die Angaben der Gew.-% der Komponenten H) bis K) sind die Gewichte der jeweiligen Komponente bezogen auf das Trockengewicht der Lignocellulosepartikel G) [Komponente G)].

Das Trockengewicht der Lignocellulosepartikel A) [Komponente A)] bzw. der Lignocellulosepartikel G) bedeutet in dieser Offenbarung das Gewicht der Lignocellulosepartikel ohne das darin enthaltene Wasser. Es wird auch als atro-Gewicht (absolut trocken) bezeichnet. Die Gewichtsangaben der Komponenten B) bis F) sowie der Komponenten H) bis K) beziehen sich auf das Gewicht der jeweiligen Komponente ohne Wasser. Werden die Komponenten in wässriger Form, also beispielsweise in Form von wässrigen Lösungen oder Emulsionen, eingesetzt, dann wird das Wasser bei den Gewichtsangaben nicht berücksichtigt. Werden beispielsweise 5 kg 30%ige Ammoniumnitrat-Lösung als Komponente I) pro 100 kg Lignocellulosepartikel G) (Trockengewicht) eingesetzt, dann ergeben sich 1,5 Gew.-% Ammoniumnitrat. Bei Aminoplastharzen wird das Gewicht auf den Feststoffgehalt bezogen. Der Feststoffgehalt von Aminoplastharzen wird bestimmt, indem 1 g des Harzes in eine Wägschale eingewogen, 2 Stunden bei 120°C +/- 2°C in einem Trockenschrank getrocknet und der Rückstand nach Temperierung auf Raumtemperatur in einem Exsikkator gewogen wird. (Zeppenfeld, Grunwald, Klebstoffe in der Holz -und Möbelindustrie, DRW Verlag, 2. Auflage, 2005, Seite 286).

Zusätzlich enthalten alle Schichten Wasser, das bei den Gewichtsangaben der Komponenten A) bis K) nicht berücksichtigt wird.

Das Wasser kann aus der in den lignocellulosehaltigen Partikeln A) bzw. G) enthaltenen Restfeuchte, aus den Bindemitteln C) bzw. H), beispielsweise wenn das isocyanathaltige Bindemittel als wässrige Emulsion vorliegt oder wenn wässrige Aminoplastharze eingesetzt werden, aus zusätzlich zugegebenem Wasser, beispielsweise zum Verdünnen der Bindemittel oder zum Befeuchten der Deckschichten, aus den Additiven E) bzw. J), beispielsweise wässrige Paraffinemulsionen, aus den Ammoniumsalzen D) bzw. I), beispielsweise wässrige Ammoniumsalzlösungen, oder aus den expandierten Kunststoffteilchen B), wenn diese zum Beispiel mit Wasserdampf aufgeschäumt werden, stammen. Es kann auch Wasser unabhängig von den Komponenten zugesetzt werden, z.B. durch Zumischen von Wasser, oder Aufsprühen von Wasser. Der Wassergehalt der Mischung für den Kern beträgt nach Verfahrensschritt a) 3 bis 15 Gew.-%, bevorzugt 3,5 bis 12 Gew.-%, besonders bevorzugt 4 bis 10 Gew.-%, ganz besonders bevorzugt 5 bis 9 Gew.-% bezogen auf das Gesamttrockengewicht der Mischung der Komponenten A) bis F). Der Wassergehalt der Mischung(en) für die Deckschichten beträgt nach Verfahrensschritt a) 5 bis 20 Gew.-%, bevorzugt 6 bis 16 Gew.-%, besonders bevorzugt 7 bis 14 Gew.-%, ganz besonders bevorzugt 8 bis 13 Gew.-% bezogen auf das Gesamttrockengewicht der Mischung(en) der Komponenten G) bis K). Der Wassergehalt der Mischungen nach dem Verfahrensschritt a) wird nach der Darrmethode bestimmt (A. Wagenführ, F. Scholz, Taschenbuch der Holztechnik, 2. Auflage, 2012, Carl Hanser Verlag, Seite 84). Dazu wird eine Probe der jeweiligen Mischung im feuchten ($m_f$ = Masse feucht) und im darrtrockenen Zustand ($m_d$ = Masse darrtrocken) gewogen. Zur Bestimmung der Darrmasse erfolgt eine Trocknung bei 103 °C bis zur Massekonstanz. Anschließend wird die Probe im Exsikkator abgekühlt und die Masse im darrtrockenen Zustand bestimmt. Der Wassergehalt wird wie folgt berechnet: Wassergehalt [in Gew.-%] = [($m_f$-$m_d$) / $m_d$] • 100%.

Bei mehrschichtigen Lignocellulosewerkstoffen ist der Wassergehalt in der Mischung bzw. den Mischungen für die Deckschichten bevorzugt größer als im Kern oder gleich groß. Besonders bevorzugt ist der Wassergehalt [in Gew.-%] in der Mischung bzw. den Mischungen für die Deckschichten um 0,5 bis 4 Gew.-%, ganz besonders bevorzugt um 2 bis 4 Gew.-% größer als im Kern.

Der Aufbau der mehrschichtigen Lignocellulosewerkstoffe folgt folgendem Muster:

(1) Deckschicht (DS-A), die obere Deckschicht,

(2) Kern (Kern-B) und

(3) Deckschicht (DS-C), die untere Deckschicht,

wobei die Deckschichten DS-A und DS-C jeweils aus einer oder mehreren, also 1 bis 5, bevorzugt 1 bis 3, besonders bevorzugt 1 bis 2 Schichten unterschiedlicher Zusammensetzungen aufgebaut sein können und die Zusammensetzungen Deckschichten DS-A und DS-C gleich oder unterschiedlich, bevorzugt gleich sind. Insbesondere besteht der Aufbau der mehrschichtigen Lignocellulosewerkstoffe aus einem Kern und einer oberen und einer unteren Deckschicht.

Die einschichtigen Lignocellulosewerkstoffe bestehen nur aus einer Schicht, für die die gleichen Komponenten A) bis F) wie für den Kern (Kern-B) verwendet werden, und besitzen keine Deckschichten DS-A und DS-C. Im Folgenden wird diese einzige Schicht der einschichtigen Lignocellulosewerkstoffe ebenfalls als "Kern" bezeichnet.

Zusätzlich zu den Deckschichten kann der mehrschichtige Lignocellulosewerkstoff weitere äußere "Schutzschichten" enthalten, bevorzugt zwei weitere äußere Schichten, also eine obere Schutzschicht, die an die Deckschicht DS-A (bei einer Schicht) bzw. an die oberste der oberen Deckschichten DS-A (bei mehreren Schichten) angrenzt und eine untere Schutzschicht, die an die Deckschicht DS-C (bei einer Schicht) bzw. die unterste der unteren Deckschichten DS-C (bei mehreren Schichten) angrenzt, die jeweils eine beliebige Zusammensetzung aufweisen.

Diese Schutzschichten sind deutlich dünner als die Deckschichten. Das Massenverhältnis zwischen Schutzschichten und Deckschichten ist kleiner als 10:90, bevorzugt kleiner als 5:95. Ganz besonders bevorzugt sind keine Schutzschichten vorhanden.

Der einschichtige Holzwerkstoff kann zusätzlich zu der Schicht Kern-B äußere Schutzschichten enthalten, bevorzugt zwei weitere äußere Schichten, also eine obere Schutzschicht und eine untere Schutzschicht, die an Schicht Kern-B angrenzen, die eine beliebige Zusammensetzung und einen beliebigen dielektrischen Verlust aufweisen.

Diese Schutzschichten sind deutlich dünner als die Schicht des Kerns. Das Massenverhältnis zwischen Schutzschichten und Kern-B ist kleiner als 5:95, bevorzugt kleiner als 3:97. Ganz besonders bevorzugt sind keine Schutzschichten vorhanden.

Im offenbarten Verfahren zur Herstellung von mehrschichtigen Lignocellulosewerkstoffen mit einem Kern und mindestens einer oberen und einer unteren Deckschicht und von einschichtigen Lignocellulosewerkstoffen mit einer Schicht, die dem Kern entspricht, wird die gestreute und verdichtete Matte durch Anlegen eines hochfrequenten elektrischen Feldes im Kern auf eine Temperatur von mindestens 90°C, also 90 bis 170°C, bevorzugt mindestens 100°C, also 100 bis 170°C, besonders bevorzugt mindestens 110°C, also 110 bis 170°C, insbesondere mindestens 120°C, also 120 bis 170°C, erwärmt, wobei diese Temperatur (die Endtemperatur der Erwärmung) in weniger als 40 s/mm•d, bevorzugt weniger als 20 s/mm•d, besonders bevorzugt weniger als 12,5 s/mm•d, insbesondere weniger als 7,5 s/mm•d, ganz besonders bevorzugt weniger als 5,5 s/mm•d ab dem Anlegen des hochfrequenten elektrischen Feldes erreicht wird, wobei d die Dicke der Platte zum Zeitpunkt Z ist. Als Zeitpunkt Z ist hierbei der Zeitpunkt zu verstehen, wenn die Erwärmung im angelegten hochfrequenten elektrischen Feld abgeschlossen ist.

In einer besonderen Ausführungsform für das offenbarte Verfahren zur Herstellung von mehrschichtigen Lignocellulosewerkstoffen wird der Kern schneller erwärmt als die Deckschichten. Das kann man dadurch erreichen, dass man die Mengen an Komponenten D) und F) und die Mengen an Komponenten I) und K) so wählt, dass Bedingung 1 und Bedingung 2 erfüllt werden.

Bedingung 1

Der Anteil an Komponente F) bezogen auf das Trockengewicht der Lignocellulosepartikel A) in der Mischung der Komponenten A) bis F) ist um mindestens den Faktor 1,1 höher als der Anteil Komponente K) bezogen auf das Trockengewicht der Lignocellulosepartikel G) in der Mischung der Komponenten G) bis K), also Komponente F) $\geq$ 1,1 • Komponente K). Das heißt, wenn der Anteil an Komponente K) in der Mischung der Komponenten G) bis K) beispielsweise 1 Gew.-% beträgt, dann ist der Anteil an Komponente F) in der Mischung der Komponenten A) bis F) mindestens 1,1 Gew.-%. Bevorzugt ist der Anteil an Komponente F) bezogen auf das Trockengewicht der Lignocellulosepartikel A) in der Mischung der Komponenten A) bis F) um mindestens den Faktor 1,5 (also Komponente F) $\geq$ 1,5 • Komponente K)), besonders bevorzugt um mindestens den Faktor 3 (also Komponente F) $\geq$ 3 • Komponente K)), ganz besonders bevorzugt um mindestens den Faktor 10 (also Komponente F) $\geq$ 10 • Komponente K)) höher als der Anteil der Komponente K) bezogen auf das Trockengewicht der Lignocellulosepartikel G) in der Mischung der Komponenten G) bis K).

Bedingung 2

Die Summe aus dem Anteil an Komponente F) und dem Anteil an Komponente D) jeweils bezogen auf das Trockengewicht der Lignocellulosepartikel A) in der Mischung der Komponenten A) bis F) ist um mindestens den Faktor 1,1 höher als die Summe aus dem Anteil der Komponente K) und dem Anteil der Komponente I) jeweils bezogen auf das Trockengewicht der Lignocellulosepartikel G) in der Mischung der Komponenten G) bis K), also [Komponente F) + Komponente D)] $\geq$ 1,1 • [Komponente K) + Komponente I)]. Das heißt, wenn der Anteil an Komponente K) in der Mischung der Komponenten G) bis K) beispielsweise 0,5 Gew.-% und der Anteil an Komponente I) 1,5 Gew.-% beträgt, dann muss die Summe aus dem Anteil an Komponente F) und dem Anteil an Komponente D) in der Mischung der Komponenten A) bis D) mindestens 1,1 • 2 Gew.-% = 2,2 Gew.-% betragen (also zum Beispiel Anteil an Komponente F) = 0,7 Gew.-% und Anteil an Komponente D) = 1,5 Gew.-%). Bevorzugt ist die Summe aus dem Anteil an Komponente F) und dem Anteil an Komponente D) jeweils bezogen auf das Trockengewicht der Lignocellulosepartikel A) in der Mischung der Komponenten A) bis F) um mindestens den Faktor 1,5 (also [Komponente F) + Komponente D)] $\geq$ 1,5 • [Komponente K) + Komponente I)]), besonders bevorzugt um mindestens den Faktor 3 (also [Komponente F) + Komponente D)] $\geq$ 3

• [Komponente K) + Komponente I)]), ganz besonders bevorzugt um mindestens den Faktor 5 (also [Komponente F) + Komponente D)] ≥ 5 • [Komponente K) + Komponente I)]) höher als die Summe aus dem Anteil der Komponente K) und dem Anteil der Komponente I) - jeweils bezogen auf das Trockengewicht der Lignocellulosepartikel G) - in der Mischung der Komponenten G) bis K).

In einer weiteren besonderen Ausführungsform für das offenbarte Verfahren zur Herstellung von mehrschichtigen Lignocellulosewerkstoffe wird der Kern langsamer erwärmt als die Deckschichten. Das kann man dadurch erreichen, dass man die Mengen an Komponenten D) und F) und die Mengen an Komponenten I) und K) so wählt, dass die Bedingung 3 und die Bedingung 4 erfüllt werden.

Bedingung 3

Der Anteil an Komponente F) bezogen auf das Trockengewicht der Lignocellulosepartikel A) in der Mischung der Komponenten A) bis F) ist um mindestens den Faktor 1,1 niedriger als der Anteil Komponente K) bezogen auf das Trockengewicht der Lignocellulosepartikel G) in der Mischung der Komponenten G) bis K), also Komponente F) ≤ 1,1 • Komponente K). Bevorzugt ist der Anteil an Komponente F) bezogen auf das Trockengewicht der Lignocellulosepartikel A) in der Mischung der Komponenten A) bis F) um mindestens den Faktor 1,5 (also Komponente F) ≤ 1,5 • Komponente K)), besonders bevorzugt um mindestens den Faktor 3 (also Komponente F) ≤ 3 • Komponente K)), ganz besonders bevorzugt um mindestens den Faktor 10 (also Komponente F) ≤ 10 • Komponente K)) niedriger als der Anteil der Komponente K) bezogen auf das Trockengewicht der Lignocellulosepartikel G) in der Mischung der Komponenten G) bis K).

Bedingung 4

Die Summe aus dem Anteil an Komponente F) und dem Anteil an Komponente D) jeweils bezogen auf das Trockengewicht der Lignocellulosepartikel A) in der Mischung der Komponenten A) bis F) ist um mindestens den Faktor 1,1 niedriger als die Summe aus dem Anteil der Komponente K) und dem Anteil der Komponente I) jeweils bezogen auf das Trockengewicht der Lignocellulosepartikel G) in der Mischung der Komponenten G) bis K), also [Komponente F) + Komponente D)] ≤ 1,1 • [Komponente K) + Komponente I)]. Bevorzugt ist die Summe aus dem Anteil an Komponente F) und dem Anteil an Komponente D) jeweils bezogen auf das Trockengewicht der Lignocellulosepartikel A) in der Mischung der Komponenten A) bis F) um mindestens den Faktor 1,5 (also [Komponente F) + Komponente D)] ≤ 1,5 • [Komponente K) + Komponente I)]), besonders bevorzugt um mindestens den Faktor 3 (also [Komponente F) + Komponente D)] ≤ 3 • [Komponente K) + Komponente I)]), ganz besonders bevorzugt um mindestens den Faktor 5 (also [Komponente F) + Komponente D)] ≤ 5 • [Komponente K) + Komponente I)]) niedriger als die Summe aus dem Anteil der Komponente K) und dem Anteil der Komponente I) - jeweils bezogen auf das Trockengewicht der Lignocellulosepartikel G) - in der Mischung der Komponenten G) bis K).

In der Regel weist der Kern-B (bzw. die einzige Schicht) im offenbarten Verfahren nach dem Verfahrensschritt b) bei der gleichen Frequenz, die zur Erwärmung im Verfahrensschritt d) verwendet wird, einen dielektrischen Verlust ε" von mindestens 0,008, bevorzugt mindestens 0,010, besonders bevorzugt mindestens 0,015, insbesondere mindestens 0,020 auf.

Der dielektrische Verlust für die Schicht des Kern-B (bzw. der einzigen Schicht) der lignocellulosehaltigen Werkstoffe nach Verfahrensschritt b) wird bestimmt, indem die gestreute Mischung der Komponenten A) bis F) in einem elektrischen Feld untersucht wird.

Für die dielektrische Verschiebung gilt $D(\omega) = \varepsilon^*(\omega)E(\omega)$, wobei $E(\omega)$ das elektrische Feld der Frequenz $\omega$ ist und $\varepsilon^*(\omega)$ die komplexe Dielektrizitätskonstante bei der Frequenz $\omega$. $\varepsilon^*(\omega)$ ist eine komplexe Größe und setzt sich aus den Faktoren $\varepsilon_0$ (Permittivität des Vakuums) und $\varepsilon_r^*$ (relative Permittivität) zusammen, das heißt $\varepsilon^*(\omega) = \varepsilon_0 \, \varepsilon_r^*$. Die komplexe relative Permittivität lässt sich durch einen Real- und einen Imaginäranteil beschreiben: $\varepsilon_r^* = \varepsilon' - i\varepsilon''$, wobei die dielektrischen Verluste, also die Umwandlung von elektrischer Energie in Wärmeenergie, über den Imaginärteil $\varepsilon''$ erfasst werden. $\varepsilon''$ wird auch als dielektrischer Verlust bezeichnet. Die Verlustleistungsdichte p bei dielektrischer Erwärmung beträgt bezogen auf das Materialvolumen

$$p = \omega \cdot \varepsilon'' \cdot \varepsilon_0 \cdot E^2$$

Durch die Bestimmung des dielektrischen Verlusts einer Materialmischung kann also ermittelt werden, welcher Anteil der elektrischen Energie des angelegten Wechselfelds in Wärmeenergie umgewandelt wird.

Die Bestimmung des dielektrischen Verlusts der Mischungen A) bis F) kann mittels einer Messkammer durchgeführt werden, die aus einem äußeren Metallzylinder und einem inneren Metallzylinder besteht. Der Aufbau entspricht dem eines Zylinderkondensators, wobei die Grundflächen des äußeren und des inneren Zylinders in derselben Ebene liegen und die beiden zylindrischen Oberflächen (Innenseite des äußeren und Außenseite des inneren Zylinders) koaxial sind. Die zu prüfende Mischung wird in den ringförmigen Zwischenraum gefüllt, der zwischen dem äußeren (Innenurchmesser 9,5 cm) und dem inneren Metallzylinder (Außendurchmesser 5 cm) liegt. Die Höhe der Füllung beträgt 11,9 cm. An den Zylinderkondensator wird ein elektrisches Wechselfeld angelegt und die dielektrische Antwort durch Messen des durch die Materialmischung fließenden Stroms bestimmt. Die Messung kann mittels eines LCR Meters oder eines Impedanzanalysators erfolgen. Der dielektrische Verlust setzt sich wie folgt zusammen: $\varepsilon'' = s''_{dip} + \varepsilon''_{LF}$, hierbei ist $\varepsilon''_{dip}$ der dipolare Beitrag und $\varepsilon''_{LF}$ der Leitfähigkeitsbeitrag.

Die Bestimmung des dielektrischen Verlusts erfolgt bei der gleichen Frequenz, die zur Erwärmung im Verfahrensschritt d) verwendet wird. Dazu wird entweder direkt bei dieser Frequenz gemessen oder der Wert durch übliche Extrapolationsmethoden ermittelt.

Das offenbarte Verfahren lässt sich wie folgt durchführen: Verfahrensschritt a) Die Komponenten A), B), C), D), E) und F) (Zusammensetzung des Kerns) und ggf. Komponenten G), H), I), J) und K) (Zusammensetzung der Deckschichten) werden in der Regel in separaten Mischvorgängen gemischt, wobei in der Regel jeweils die Lignocellulosepartikel [Komponente A bzw. Komponente G] vorgelegt und die restlichen Komponenten B), C), D), E) und F) bzw. H), I), J) und K) in beliebiger Reihenfolge zugegeben werden. In einer bevorzugten Ausführungsform werden der Komponente A) zuerst die Komponente B) zugefügt und anschließend die Komponenten C), D), E) und F) in beliebiger Reihenfolge zugegeben. Es können auch Komponenten vorher separat gemischt werden, bevor sie zugegeben werden. Beispielsweise kann man Komponente A) vorlegen, gegebenenfalls mit Komponente B) mischen, und anschließend eine Mischung aus den Komponenten C), D), E) und F) oder einer Mischung aus C) und D) nachgefolgt von einer aus Mischung E) und F) zugeben.

Verfahrensschritt b)

Für den einschichtigen Lignocellulosewerkstoff wird die erhaltene Mischung der Komponenten A), B), C), D) E) und F) zu einer Matte gestreut. Dabei wird die Gesamtmenge der eingesetzten Mischung durch die Zieldichte, die Zieldicke und das Zielformat des herzustellenden Lignocellulosewerkstoffs bestimmt.

Für den mehrschichtigen Lignocellulosewerkstoff werden die erhaltene Mischung der Komponenten A), B), C), D), E) und F) und die Mischung(en) der Komponenten G), H), I), J) und K) übereinander zu einer Matte gestreut, so dass sich der offenbarte Aufbau der mehrschichtigen Lignocellulosewerkstoffe [nach dem Muster (1), (2), (3)] ergibt. Dabei werden in der Regel die unteren Deckschichten, beginnend mit der äußersten Deckschicht bis zu der dem Kern nächstliegenden unteren Deckschicht, darauf die Kernschicht und anschließend die oberen Deckschichten, beginnend mit der dem Kern nächstliegenden oberen Deckschicht bis zu der äußersten Deckschicht, bevorzugt eine untere Deckschicht, darauf die Kernschicht und anschließend die obere Deckschicht gestreut.

Die eingesetzte Gesamtmenge der beiden Mischungen wird durch die Zieldichte, die Zieldicke und das Zielformat des herzustellenden Lignocellulosewerkstoffs bestimmt. Das Verhältnis der Gesamtmasse der gestreuten Menge der Mischung der Komponenten A), B), C), D), E) und F) für den Kern zu der Gesamtmasse der gestreuten Menge der Mischung(en) der Komponenten G), H), I), J) und K) für die Deckschichten beträgt in der Regel 100:1 bis 0,25:1, bevorzugt 10:1 bis 0,5:1, besonders bevorzugt 6:1 bis 0,75:1, insbesondere 4:1 bis 1:1.

In der Regel streut man die Mischungen dazu direkt z.B. auf ein Formband.

Die Streuung kann nach an sich bekannten Methoden wie Wurfsichtstreuung, oder Windsichtstreuung, oder z.B. mit Rollensystemen (siehe beispielsweise M. Dunky, P. Niemz, Holzwerkstoffe und Leime, Seite 119 bis 121, Springer Verlag Heidelberg, 2002) diskontinuierlich oder kontinuierlich, bevorzugt kontinuierlich, durchgeführt werden.

Verfahrensschritt c)

Nach dem Streuen jeder einzelnen Schicht kann eine Verdichtung stattfinden. Bei den mehrschichtigen Lignocellulosewerkstoffen wird die Verdichtung bevorzugt nach dem Streuen aller Schichten übereinander durchgeführt.

Die Verdichtung im Verfahrensschritt c) kann in der Regel entweder vor, während und/oder nach dem Verfahrensschritt d) durchgeführt werden.

Die Verdichtung im Verfahrensschritt c) kann in einem, zwei oder mehreren Schritten erfolgen. Hierbei bestehen die Optionen, die Erwärmung durch Anlegen eines hochfrequenten elektrischen Feldes (Verfahrensschritt d)) vor dem ersten dieser Schritte, zwischen diesen Schritten, nach dem letzten dieser Schritte oder während eines, zweier oder mehrerer dieser Schritte durchzuführen. In einer bevorzugten Ausführungsform wird die gestreute Matte in einem oder in mehreren Schritten verdichtet und anschließend durch Anlegen eines hochfrequenten elektrischen Feldes erwärmt, wobei während dieser Erwärmung ein oder kein, bevorzugt kein weiterer Verdichtungsschritt durchgeführt wird. Findet nach dem Anschalten des hochfrequenten elektrischen Feldes (also nach dem Zeitpunkt Z) innerhalt des Verfahrensschritts d) ein weiterer Verdichtungsschritt statt, dann erfolgt dieser bevorzugt ohne weitere Temperaturerhöhung im Kern. Die Erwärmung im Verfahrensschritt d) auf erhöhte Temperatur erfolgt bevorzugt während und/oder nach, besonders bevorzugt nach der Verdichtung bzw. dem letzten Verdichtungsschritt.

Der/die im Verfahrensschritt c) stattfindende(n) Verdichtungsschritt(e) ist/sind dadurch charakterisiert, dass die Oberflächen der Verdichtungsvorrichtung, die in Kontakt mit der zu verdichtenden Matte stehen und einen Druck auf die Matte ausüben, Temperaturen von 10 bis 110°C, bevorzugt 15 bis 90°C, besonders 20 bis 75°C und ganz besonders bevorzugt 25 bis 60°C aufweisen. Der/die im Verfahrensschritt c) stattfindende(n) Verdichtungsschritt(e) erfolgt/erfolgen in der Regel bei einem Druck von 1 bis 30 bar, bevorzugt 2 bis 25 bar, besonders bevorzugt 3 bis 20 bar. Die Verdichtung bzw. die Verdichtungsschritte führen in der Regel zu einer Matte, die zum Zeitpunkt Z eine Höhe von 20 bis 80%, bevorzugt 25 bis 70%, besonders bevorzugt 27,5 bis 60%, ganz besonders bevorzugt 30 bis 50% der Höhe aufweist, die die Matte unmittelbar nach dem Streuen der Matte besaß.

Verfahrensschritt d)

Die Energie zur Erwärmung der Matte wird durch Anlegen eines hochfrequenten elektrischen Feldes eingebracht.

Dabei wird die Matte so erwärmt, dass zum Zeitpunkt Z die Schicht des Kerns eine Temperatur von mindestens 90°C aufweist und diese Temperatur in weniger als 40 s/mm · d ab dem Anlegen des hochfrequenten elektrischen Feldes erreicht wird, wobei d die Dicke der Platte zum Zeitpunkt Z ist.

Die mittleren Verweilzeit, in der das hochfrequente elektrische Feld auf die Matte einwirkt, beträgt in der Regel weniger als 40 Sekunden, bevorzugt weniger als 20 Sekunden, besonders bevorzugt weniger als 12,5 Sekunden, insbesondere weniger als 7,5 Sekunden, ganz besonders bevorzugt weniger als 5,5 s pro mm Plattendicke d, wobei d die Dicke der Platte zum Zeitpunkt Z ist.

In dieser Zeit erfolgt die Aushärtung des bzw. der eingesetzten Bindemittel, so dass die Platte nach diesem Verfahrensschritt d) eine ausreichende Festigkeit aufweist. Ein weiterer Heißpressschritt ist im offenbarten Verfahren nicht erforderlich, um eine ausreichende Festigkeit zu erzielen, kann aber durchgeführt werden, um beispielsweise die äußeren Bereiche des plattenförmigen Holzwerkstoffs weiter zu verdichten.

Zum Zeitpunkt Z, also wenn das hochfrequente elektrische Feld abgeschaltet wird, beträgt die Temperatur im Kern (bzw. der einzigen Schicht) mindestens 90°C, also 90 bis 170°C, bevorzugt mindestens 100°C, also 100 bis 170°C, besonders bevorzugt mindestens 110°C, also 110 bis 170°C, insbesondere mindestens 120°C, also 120 bis 170°C.

Bei dem angelegten hochfrequenten elektrischen Feld kann es sich um Mikrowellenstrahlung oder um ein hochfrequentes elektrisches Feld handeln, das nach Anlegen einer hochfrequenten Wechselspannung an einen Plattenkondensator zwischen den beiden Kondensatorplatten entsteht.

Für die hochfrequenten elektromagnetischen Felder eignen sich Frequenzen von 100 kHz bis 30 GHz MHz, bevorzugt 6 MHz bis 3 GHz, besonders 13 MHz bis 41 MHz, insbesondere die jeweils national bzw. international freigegebenen Frequenzen wie 13,56 MHz, 27,12 MHz, 40,68 MHz, 2,45 GHz, 5,80 GHz, 24,12 GHz, besonders bevorzugt 13,56 und 27,12 MHz.

Die erforderliche elektrische Leistung im offenbarten Verfahren beträgt in der Regel 10 bis 10.000 kWh, bevorzugt, 100 bis 5.000 kWh, besonders bevorzugt 500 bis 2.000 kWh.

Die erforderliche elektrische Feldstärke für die Erwärmung im hochfrequenten elektrischen Feld im offenbarten Verfahren beträgt in der Regel 0,1 bis 10.000 V/mm, bevorzugt 1 bis 2.000 V/mm, besonders bevorzugt 10 bis 500 V/mm.

Bezogen auf die Fläche der Matte, die im hochfrequenten Feld erwärmt wird (also die Fläche der Matte, auf die das elektrische Wechselfeld wirkt), liegt die Nennleistung der Hochfrequenzgeneratoren in der Regel zwischen 10 und 200 kW/m$^2$, bevorzugt zwischen 20 und 120 kW/m$^2$, besonders bevorzugt zwischen 25 und 100 kW/m$^2$, besonders bevorzugt zwischen 30 und 80 kW/m$^2$. Der Wirkungsgrad (Verhältnis zwischen Wirkleistung und Nennleistung) liegt dabei in der Regel zwischen 25 und 80%, bevorzugt zwischen 40 und 80%, besonders bevorzugt zwischen 50 und 80%.

In einer besonders bevorzugten Ausführungsform kann zunächst ein Verdichtungsschritt und danach das Erwärmen durch Anlegen eines hochfrequenten Hochspannungsfelds durchgeführt werden. Dieser Vorgang kann entweder kontinuierlich oder diskontinuierlich, bevorzugt kontinuierlich erfolgen.

Hierzu kann die gestreute und verdichtete Matte mittels eines Förderbandes durch einen Bereich zwischen parallel angeordneten Plattenkondensatoren durchgeführt werden.

Eine Vorrichtung für einen kontinuierlichen Prozess, um die Erwärmung mittels Anlegen eines hochfrequenten elektrischen Feldes nach der Verdichtung innerhalb der gleichen Maschine zu realisieren, ist beispielsweise in WO-A-97/28936 beschrieben.

Die Erwärmung unmittelbar nach dem Verdichtungsschritt kann auch in einer diskontinuierlich arbeitenden Hochfrequenz-Presse erfolgen, z.B. in einer Hochfrequenz-Presse, beispielsweise in der Presse HLOP 170 der Firma Hoefer Presstechnik GmbH.

Erfolgt die Erwärmung nach dem Verdichten, kann das Auffedern der Matte während der Erwärmung dadurch zurückgedrängt, minimiert bzw. verhindert werden, dass die Erwärmung in einem nach oben und unten begrenzten Raum durchgeführt wird. Die Begrenzungsflächen sind dabei so ausgeführt, dass der Energieeintrag möglich ist. Gegebenenfalls sind die Begrenzungsflächen so ausgeführt, dass sie einen Druck auf die Matte ausüben, der so groß ist, dass das Auffedern während der Erwärmung verhindert wird.

In einer besonderen Ausführungsform für einen kontinuierlichen Prozess handelt es sich bei diesen Begrenzungsflächen um Pressbänder, die durch Rollen angetrieben werden. Hinter diesen Pressbändern sind die Platten der Kondensatoren angeordnet. Die Matte wird dabei durch ein Paar von Kondensatorplatten geleitet, wobei sich zwischen Matte und oberer Kondensatorplatte das eine Pressband, zwischen Matte und unterer Kondensatorplatte das andere Pressband befindet. Eine der beiden Kondensatorplatten kann geerdet sein, so dass die Hochfrequenz-Heizung nach dem Prinzip der unsymmetrischen Einspeisung arbeitet.

Bei den mehrschichtigen Lignocellulosewerkstoffen können die Deckschichten DS-A und DS-C zum Zeitpunkt Z eine andere Temperatur als der Kern-B aufweisen. In der Regel beträgt die Temperaturdifferenz zwischen 0 und 20°C, bevorzugt zwischen 0 und 10°C, besonders bevorzugt zwischen 0 und 5°C.

Die Temperaturangaben beziehen sich auf Messungen, die zum Zeitpunkt Z durchgeführt werden. Als Temperatur des Kern-B und der Deckschichten DS-A und DS-C ist dabei jeweils die Temperatur in der Mitte der jeweiligen Schicht zu verstehen. Die Messung wird also in der Ebene des Kerns-B (bzw. der Deckschicht(en) DS-A bzw. der Deckschicht(en) DS-C) durchgeführt, die dadurch charakterisiert ist, dass sie parallel zu den Oberflächen der Matte verläuft und dass oberhalb dieser Ebene und unterhalb dieser Ebene jeweils das gleiche Volumen an Mischungen A) bis F) (bzw. G) bis K)) innerhalb der jeweiligen Schicht vorliegt.

Diese Messung kann wie folgt erfolgen:
Unmittelbar nach dem Verfahrensschritt b) wird pro Schicht der Matte ein Temperaturmessfühler eingeführt, so dass die Spitze der Messfühler sich jeweils in der Mitte der Schichten befindet. Vorteilhaft werden die Messfühler parallel zu den im vorangegangenen Absatz beschriebenen Ebenen eingeführt. Beispielsweise wird bei einer dreischichtigen Matte, die aus einer oberen Deckschicht DS-A, einem Kern-B und einer unteren Deckschicht DS-C (die hinsichtlich Zusammensetzung und Menge der Deckschicht DS-A entspricht) und bei der nach Verfahrensschritt b) die Deckschichten DS-A und DS-C z.B. eine Dicke von 4 mm und der Kern-B eine Dicke von 10 mm aufweisen, ein Temperaturfühler in 2 mm Höhe (vom Boden der Matte aus gerechnet) für die Temperatur der DS-C, ein Temperaturfühler in 9 mm Höhe für die Temperatur des Kerns B und ein Temperaturfühler in 16 mm Höhe für die Temperatur der Deckschicht DS-A eingeführt.

Nach dem Verfahrensschritt d) weisen die Platten in der Regel Querzugfestigkeiten von mehr als 0,1 N/mm$^2$, bevorzugt mehr als 0,2 N/mm$^2$, besonders bevorzugt mehr als 0,3 N/mm$^2$ auf (Querzugfestigkeiten gemäß EN 319).

Die Festigkeit der plattenförmigen Lignocellulosewerkstoffe nach dem Verfahrensschritt d) ist ausreichend hoch, so dass kein weiteres Einbringen von thermischer Energie nötig sind. Bevorzugt findet nach dem Verfahrensschritt d) kein weiterer Verdichtungsschritt (Verdichtung bei niedriger Temperatur als Teilschritt des Verfahrensschritts c) oder Verdichtung bei hoher Temperatur als Verfahrensschritt e)) statt.

Verfahrensschritt e)

Der/die im Verfahrensschritt e) stattfindende(n) Verdichtungsschritt(e) ist/sind dadurch charakterisiert, dass die Oberflächen der Verdichtungsvorrichtung, die in Kontakt mit dem aus den Verfahrensschritten c) und d) erhaltenen plattenförmigen Halbzeug stehen und einen Druck auf den nach den Verfahrensschritten c) und d) erhaltenen plattenförmigen Lignocellulosewerkstoff ausüben, beheizt sind und Temperaturen von 120 bis 300°C, bevorzugt 140 bis 280°C, besonders bevorzugt 150 bis 250°C aufweisen.

Dabei wird mit einem Druck von 1 bis 50 bar, bevorzugt 3 bis 40 bar, besonders bevorzugt 5 bis 30 bar zu Lignocellulosewerkstoffen auf die gewünschte Dicke gepresst. Dieses Heißpressen kann nach allen dem Fachmann bekannten Verfahren erfolgen (siehe Beispiele in "Taschenbuch der Spanplatten Technik" H.-J. Deppe, K. Ernst, 4. Aufl., 2000, DRW - Verlag Weinbrenner, Leinfelden-Echterdingen, Seite 232 bis 254, und "MDF- Mitteldichte Faserplatten" H.-J. Deppe, K. Ernst, 1996, DRW- Verlag Weinbrenner, Leinfelden-Echterdingen, Seite 93 bis 104).

Bevorzugt werden kontinuierliche Pressverfahren, beispielsweise mit Doppelbandpressen, verwendet. Die Pressdauer im Verfahrensschritt e) beträgt normalerweise 0,1 bis 5 Sekunden pro mm Plattendicke, bevorzugt 0,1 bis 3 Sekunden pro mm Plattendicke, besonders bevorzugt 0,1 bis 1 Sekunden pro mm Plattendicke.

In einer bevorzugten Ausführungsform, in der nach Verfahrensschritt d) ein oder mehrere weitere Verdichtungsschritte (Verdichtung bei niedriger Temperatur als Teilschritt des Verfahrensschritts c) und/oder Verdichtung bei hoher Temperatur als Verfahrensschritt e)) durchgeführt werden, liegt der Verdichtungsfaktor V, der sich aus dem Quotienten aus $d_v$ und $d_n$ (V = $d_v$ / $d_n$) ergibt, zwischen 1,01 und 1,15, bevorzugt zwischen 1,01 und 1,1, besonders bevorzugt zwischen 1,01 und 1,05. $d_v$ ist dabei die Dicke der Matte nach dem Verfahrensschritt d) und $d_n$ ist die Dicke der Platte nach dem letzten der dem Verfahrensschritt d) nachfolgenden Verdichtungsschritten.

Bevorzugt findet kein Verfahrensschritt e) statt.

Verfahrensschritt f)

Nach dem Verfahrensschritt e) bzw. - wenn kein Verfahrensschritt e) stattfindet - nach dem Verfahrensschritt d) bzw. - wenn nach dem Verfahrensschritt d) noch Teilschritte des Verfahrensschritts c) stattfinden - nach dem Verfahrensschritt d), werden die erhaltenen plattenförmigen Lignocellulosewerkstoffe abgekühlt. Das kann beispielsweise durch Abkühlen im Stapel nach dem Einlagern oder in einen Kühlstern erfolgen. Geeignete Vorrichtungen und Verfahren sind in M. Dunky, P. Niemz, Holzwerkstoffe und Leime, Seite 868 bis 869, Springer Verlag Heidelberg, 2002, beschrieben.
Die Komponenten des Kerns A), B), C), D), E), F) und die Komponenten der Deckschichten G), H), I), J), K) haben folgende Bedeutungen.

Komponente A) und G):

Als Rohstoff für die Lignocellulosepartikel A) und G) eignet sich jede beliebige Holzart oder deren Mischungen, beispielsweise Fichten-, Buchen-, Kiefern-, Lärchen-, Linden-, Pappeln-, Eukalyptus-, Eschen-, Kastanien-, Tannenholz oder deren Mischungen, bevorzugt Fichten-, Buchenholz oder deren Mischungen, insbesondere Fichtenholz. Es können beispielsweise Holzteile wie Holzlagen, Holzstreifen (Strands), Holzspäne, Holzfasern, Holzstaub oder deren Mischungen, bevorzugt Holzspäne, Holzfasern, Holzstaub und deren Mischungen, besonders bevorzugt Holzspäne, Holzfasern oder deren Mischungen - wie sie für die Herstellung von Spanplatten, MDF (Mitteldichte Faserplatten) und HDF (Hochdichte Faserplatten) eingesetzt werden. Die Lignocellulosepartikel können auch von holzhaltigen Pflanzen wie Flachs, Hanf, Getreide oder anderen Einjahrespflanzen stammen, bevorzugt von Flachs oder Hanf. Besonders bevorzugt werden Holzspäne eingesetzt, wie sie bei der Herstellung von Spanplatten verwendet werden.
Ausgangsmaterialien für die Lignocellulosepartikel sind üblicherweise Rundhölzer, Durchforstungshölzer, Resthölzer, Waldholzabfälle, Industrieresthölzer, Gebrauchthölzer, Produktionsabfälle aus der Holzwerkstoffproduktion, gebrauchte Holzwerkstoffe sowie lignocellulosehaltige Pflanzen. Die Aufbereitung zu den gewünschten lignocellulosehaltigen Partikeln, beispielsweise zu Holzpartikeln wie Holzspäne oder Holzfasern, kann nach an sich bekannten Verfahren erfolgen (z.B. M. Dunky, P. Niemz, Holzwerkstoffe und Leime, Seite 91 bis 156, Springer Verlag Heidelberg, 2002).
Die Größe der Lignocellulosepartikel kann in weiten Grenzen variiert werden und in weiten Grenzen schwanken.
Wenn es sich bei den Lignocellulosepartikeln A) und G) um Lignocellulosefasern handelt, dann ist die volumengewichtete mittlere Faserlänge der Komponente G) der Deckschichten bevorzugt kleiner oder gleich der volumengewichteten mittleren Faserlänge der Komponente A) im Kern der mehrschichtigen Lignocellulosewerkstoffe. Das Verhältnis der volumengewichteten mittleren Faserlängen ($\overline{x}_{Strecke}$) der Komponente G) zur volumengewichteten mittleren Faserlängen ($\overline{x}_{Strecke}$) der Komponente A) kann in weiten Grenzen variiert werden und liegt in der Regel bei 0,1:1 bis 1:1, bevorzugt 0,5:1 bis 1:1, besonders bevorzugt 0,8:1 bis 1:1.
Die volumengewichtete mittlere Faserlänge ($\overline{x}_{Strecke}$) der Komponente A) beträgt in der Regel 0,1 bis 20 mm, bevorzugt 0,2 bis 10 mm, besonders bevorzugt 0,3 bis 8 mm, ganz besonders bevorzugt 0,4 bis 6 mm.
Die volumengewichtete mittlere Faserlänge $\overline{x}_{Strecke}$ wird mittels digitaler Bildanalyse bestimmt. Beispielsweise kann ein Gerät der Reihe Camsizer® der Firma Retsch Technology verwendet werden. Dabei wird von jeder einzelnen Faser einer representativen Probe $x_{Strecke}$ bestimmt. $x_{Strecke}$ wird berechnet aus der Fläche der Partikelprojektion A und dem Martin-Durchmesser $X_{Ma\_min}$. Dabei gilt $x_{Strecke} = X_{Ma\_min} / A$. Aus den Einzelwerten wird der volumengewichtete Mittelwert $\overline{x}_{Strecke}$ gebildet. Die Messmethode und die Auswertung sind im Camsizer Handbuch beschrieben (Bedienungsanleitung/Handbuch Korngrößenmesssystem CAMSIZER®, Retsch Technology GmbH, Version 0445.506, Release 002, Revision 009 vom 25.06.2010).
Wenn es sich bei den Lignocellulosepartikeln A) und G) um Lignocellulosestreifen (Strands) oder Lignocellulosespäne handelt, dann ist der volumengewichtete mittlere Partikeldurchmesser der Komponente G) der Deckschichten bevorzugt kleiner oder gleich dem volumengewichteten mittleren Partikeldurchmesser der Komponente A) im Kern der mehrschichtigen Lignocellulosewerkstoffe. Das Verhältnis des volumengewichtete mittlere Partikeldurchmesser $\overline{x}_{Fe\,max}$ der Komponente G) zum volumengewichteten mittleren Partikeldurchmesser $\overline{x}_{Fe\,max}$ der Komponente A) kann in weiten Grenzen variiert werden und liegt in der Regel bei 0,01:1 bis 1:1, bevorzugt 0,1:1 bis 0,95:1, besonders bevorzugt 0,5:1 bis 0,9:1.
Der volumengewichtete mittlere Partikeldurchmesser $\overline{x}_{Fe\,max}$ der Komponente A) beträgt in der Regel 0,5 bis 100 mm, bevorzugt 1 bis 50 mm, besonders bevorzugt 2 bis 30 mm, ganz besonders bevorzugt 3 bis 20 mm.
Der volumengewichtete mittlere Partikeldurchmesser $\overline{x}_{Fe\,max}$ wird mittels digitaler Bildanalyse bestimmt. Beispielsweise kann ein Gerät der Reihe Camsizer® der Firma Retsch Technology verwendet werden. Dabei wird von jedem einzelnen Lignocellulosestreifen (Strand) oder jedem einzelnen Lignocellulosespan einer representativen Probe $x_{Fe\,max}$ bestimmt. $x_{Fe\,max}$ ist der größte Feret-Durchmesse eines Partikels (ermittelt aus verschiedenen Messrichtungen). Aus den Einzelwerten wird der volumengewichtete Mittelwert $\overline{x}_{Fe\,max}$ gebildet. Die Messmethode und die Auswertung sind im Camsizer Handbuch beschrieben (Bedienungsanleitung/Handbuch Korngrößenmesssystem CAMSIZER®, Retsch Technology GmbH, Version 0445.506, Release 002, Revision 009 vom 25.06.2010).

Setzt man Mischungen aus Holzspänen und anderen Lignocellulosepartikeln ein, z.B. Mischungen aus Holzspänen und Holzfasern, oder aus Holzspänen und Holzstaub, so beträgt der Anteil an Holzspänen der Komponente A) bzw. der Komponente G) in der Regel mindestens 50 Gew.-%, also 50 bis 100 Gew.-%, bevorzugt mindestens 75 Gew.-%, also 75 bis 100 Gew.-%, besonders bevorzugt mindestens 90 Gew.-%, also 90 bis 100 Gew.-%.

Die mittlere Dichten der Lignocellulosepartikel A) und G) liegen unabhängig voneinander in der Regel bei 0,4 bis 0,85 g/cm$^3$, bevorzugt bei 0,4 bis 0,75 g/cm$^3$, insbesondere bei 0,4 bis 0,6 g/cm$^3$. Diese Angaben beziehen sich auf die Normal-Rohdichte nach Lagerung im Normalklima (20°C, 65% Luftfeuchtigkeit).

Die Lignocellulosepartikel A) und G) können unabhängig voneinander die üblichen geringen Mengen Wasser von 0 bis 10 Gew.-%, bevorzugt 0,5 bis 8 Gew.-%, besonders bevorzugt 1 bis 5 Gew.-% (in einer üblichen geringen Schwankungsbreite von 0 bis 0,5 Gew.-%, bevorzugt 0 bis 0,4 Gew.-%, besonders bevorzugt 0 bis 0,3 Gew.-%) enthalten. Diese Mengenangabe bezieht sich auf 100 Gew.-% absolut trockene Holzsubstanz und beschreibt den Wassergehalt der Lignocellulosepartikel A) bzw. G) nach dem Trocknen (nach der oben beschriebenen Darrmethode) unmittelbar vor dem Mischen mit den anderen Komponenten.

In einer weiteren bevorzugten Ausführungsform werden für die Deckschichten Lignocellulosefasern als Lignocellulosepartikel G) und für den Kern Lignocellulosestreifen (Strand) oder Lignocellulosespäne, besonders bevorzugt Lignocellulosespäne, insbesondere Lignocellulosespäne mit einem volumengewichteten mittleren Partikeldurchmesser $\bar{x}_{Fe\,max}$ von 2 bis 30 mm als Lignocellulosepartikel A) verwendet.

Komponente B):

Als expandierte Kunststoffteilchen der Komponente B) eignen sich expandierte Kunststoffteilchen, bevorzugt expandierte thermoplastische Kunststoffteilchen mit einer Schüttdichte von 10 bis 150 kg/m$^3$, bevorzugt 30 bis 130 kg/m$^3$, besonders bevorzugt 35 bis 110 kg/m$^3$, insbesondere 40 bis 100 kg/m$^3$ (ermittelt durch Wiegen eines mit dem Schüttgut gefüllten definierten Volumens).

Expandierte Kunststoffteilchen der Komponente B) werden in der Regel in Form von Kugeln oder Perlen mit einem mittleren Durchmesser von 0,01 bis 50 mm, bevorzugt 0,25 bis 10 mm, besonders bevorzugt 0,4 bis 8,5 mm, insbesondere 0,4 bis 7 mm eingesetzt. In einer bevorzugten Ausführungsform weisen die Kugeln eine kleine Oberfläche pro Volumen auf, beispielsweise in Form eines sphärischen oder elliptischen Partikels und sind vorteilhaft geschlossenzellig. Die Offenzelligkeit nach DIN-ISO 4590 beträgt in der Regel nicht mehr als 30%, also 0 bis 30%, bevorzugt 1 bis 25%, besonders bevorzugt 5 bis 15%.

Geeignete Polymere, die den expandierbaren oder expandierten Kunststoffteilchen zugrunde liegen, sind in der Regel alle bekannten Polymere oder deren Gemische, vorzugsweise thermoplastische Polymere oder deren Gemische, die sich verschäumen lassen. Gut geeignete derartige Polymere sind beispielsweise Polyketone, Polysulfone, Polyoxymethylen, PVC (hart und weich), Polycarbonate, Polyisocyanurate, Polycarbodiimide, Polyacrylimide und Polymethacrylimide, Polyamide, Polyurethane, Aminoplastharze und Phenolharze, Styrolhomopolymere (im Folgenden auch als "Polystyrol" oder "Styrolpolymerisat" bezeichnet), Styrolcopolymere, $C_2$- bis $C_{10}$-Olefinhomopolymere, $C_2$- bis $C_{10}$-Olefincopolymere und Polyester. Bevorzugt verwendet man zur Herstellung der genannten Olefinpolymere die 1-Alkene, zum Beispiel Ethylen, Propylen, 1-Buten, 1-Hexen, 1-Octen.

Des Weiteren können den Polymeren, vorzugsweise den Thermoplasten, die den expandierbaren oder expandierten Kunststoffteilchen der Komponente B) zugrunde liegen übliche Additive, zum Beispiel UV-Stabilisatoren, Antioxidantien, Beschichtungsmittel, Hydrophobierungsmittel, Keimbildner, Weichmacher, Flammschutzmittel, lösliche und unlösliche anorganische und/oder organische Farbstoffe.

Die Komponente B) kann üblicherweise wie folgt erhalten werden:
Geeignete Polymere können mit einem ausdehnungsfähiges Medium (auch "Treibmittel" genannt) oder enthaltend ein ausdehnungsfähiges Medium durch Einwirkung von Mikrowellen-, Wärmenergie, Heißluft, vorzugsweise Dampf, und/oder Druckänderung expandiert (oft auch als "aufgeschäumt" bezeichnet) (Kunststoff Handbuch 1996, Band 4 "Polystyrol", Hanser 1996, Seiten 640 bis 673 oder US-A-5,112,875) werden. Hierbei dehnt sich in der Regel das Treibmittel aus, die Partikel nehmen an Größe zu und Zellstrukturen entstehen. Dieses Expandieren kann in üblichen Aufschäumvorrichtungen, oft als "Vorschäumer" bezeichnet, durchgeführt werden. Derartige Vorschäumer können ortsfest installiert oder aber mobil sein. Die Expandierung kann einstufig oder mehrstufig durchgeführt werden. In der Regel werden beim einstufigen Verfahren die expandierbaren Kunststoffteilchen ohne weiteres auf die gewünschte Endgröße expandiert. In der Regel werden beim mehrstufigen Verfahren die expandierbaren Kunststoffteilchen zunächst auf eine Zwischengröße expandiert und dann in einer oder mehreren weiteren Stufen über entsprechend viele Zwischengrößen zur gewünschten Endgröße expandiert. Die oben genannten kompakten Kunststoffteilchen, hierin auch "expandierbare Kunststoffteilchen" genannt, enthalten, im Gegensatz zu den expandierten Kunststoffteilchen, in der Regel keine Zellstrukturen. Die expandierten Kunststoffteilchen haben in der Regel nur noch einen geringen Gehalt an Treibmittel von 0 bis 5 Gew.-%, bevorzugt 0,5 bis 4 Gew.-%, besonders bevorzugt 1 bis 3 Gew.-% bezogen auf die Gesamtmasse Kunststoff und Treibmittel. Die so erhaltenen expandierten Kunststoffteilchen können zwischengelagert werden oder ohne weitere Zwischenschritte zur Herstellung der erfindungsgemäßen Komponente B weiterverwendet werden. Zum Expandieren der expandierbaren Kunststoffteilchen können alle dem Fachmann bekannten Treibmittel verwendet werden, beispielsweise aliphatische $C_3$- bis $C_{10}$-Kohlenwasserstoffe, wie Propan, n-Butan, Isobutan, n-Pentan, Isopentan, Neopentan cyclo-Pentan und/oder Hexan und dessen Isomere, Alkohole, Ketone, Ester, Ether oder halogenierte Kohlenwasserstoffe, bevorzugt n-Pentan, Isopentan, Neopentan und Cyclopentan, besonders bevorzugt ein handelsübliches Pentanisomerengemisch aus n-Pentan und iso-Pentan.

Der Gehalt an Treibmittel in den expandierbaren Kunststoffteilchen liegt im allgemeinen im Bereich von 0,01 bis 7 Gew.-%, vorzugsweise 0,6 bis 5 Gew.-%, besonders bevorzugt 1,1 bis 4 Gew.-%, jeweils bezogen auf die treibmittelhaltigen expandierbaren Kunststoffteilchen.

In einer bevorzugten Ausführungsform verwendet man Styrolhomopolymerisat (hierin auch einfach "Polystyrol" genannt), Styrolcopolymerisat oder deren Mischungen als einzigen Kunststoff in der Komponente B).

Derartiges Polystyrol und/oder Styrolcopolymerisat kann nach allen den Fachmann bekannten Polymerisierungsverfahren hergestellt werden, siehe z. B. Ullmann's Encyclopedia, Sixth Edition, 2000 Electronic Release oder Kunststoff-Handbuch 1996, Band 4 "Polystyrol", Seiten 567 bis 598.

Die Herstellung des expandierbaren Polystyrols und/oder Styrolcopolymerisats erfolgt in der Regel in an sich bekannter Weise durch Suspensionspolymerisation oder mittels Extrusionsverfahren.

Bei der Suspensionspolymerisation kann Styrol, gegebenenfalls unter Zusatz weiterer Comonomere in wässriger Suspension in Gegenwart eines üblichen Suspensionsstabilisators mittels radikalbildender Katalysatoren polymerisiert werden. Das Treibmittel und gegebenenfalls weitere übliche Zusatzstoffe können dabei bei der Polymerisation mit vorgelegt, im Laufe der Polymerisation oder nach beendeter Polymerisation dem Ansatz zugefügt werden. Die erhaltenen perlförmigen, mit Treibmittel imprägnierten, expandierbaren Styrolpolymerisate können nach beendeter Polymerisation von der wässrigen Phase abgetrennt, gewaschen, getrocknet und gesiebt werden.

Bei dem Extrusionsverfahren kann das Treibmittel beispielsweise über einen Extruder in das Polymer eingemischt, durch eine Düsenplatte gefördert und unter Druck zu Partikeln oder Strängen granuliert werden.

Die oben beschriebenen bevorzugten oder besonders bevorzugten expandierbaren Styrolpolymerisaten oder expandierbaren Styrolcopolymerisate haben einen relativ geringen Gehalt an Treibmittel. Derartige Polymerisate werden auch als "treibmittelarm" bezeichnet. Ein gut geeignetes Verfahren zu Herstellung von treibmittelarmen expandierbarem Polystyrol oder expandierbarem Styrolcopolymerisat wird in US-A-5,112,875 beschrieben, auf das hierin ausdrücklich Bezug genommen wird.

Wie beschrieben können auch Styrolcopolymerisate eingesetzt werden. Vorteilhaft weisen diese Styrolcopolymerisate mindestens 50 Gew.-%, also 50 bis 100 Gew.-%, vorzugsweise mindestens 80 Gew.-%, also 80 bis 100 Gew.-%, einpolymerisiertes Styrol bezogen auf die Masse des Kunststoffes (ohne Treibmittel) auf. Als Comonomere kommen z.B. $\alpha$-Methylstyrol, kernhalogenierte Styrole, Acrylnitril, Ester der Acryl- oder Methacrylsäure von Alkoholen mit 1 bis 8 C-Atomen, N-Vinylcarbazol, Maleinsäure(anhydrid), (Meth)acrylamide und/oder Vinylacetat in Betracht.

Vorteilhaft kann das Polystyrol und/oder Styrolcopolymerisat eine geringe Menge eines Kettenverzweigers einpolymerisiert enthalten, d.h. einer Verbindung mit mehr als einer, vorzugsweise zwei Doppelbindungen, wie Divinylbenzol, Butadien und/oder Butandioldiacrylat. Der Verzweiger wird im Allgemeinen in Mengen von 0,0005 bis 0,5 Mol-%, bezogen auf Styrol, verwendet. Auch Mischungen verschiedener Styrol(co)polymerisate können verwendet werden. Gut geeignete Styrolhomopolymerisate oder Styrolcopolymerisate sind glasklares Polystyrol (GPPS), Schlagzähpolystyrol (HIPS), anionisch polymerisiertes Polystyrol oder Schlagzähpolystyrol (A-IPS), Styrol-$\alpha$-Methylstyrol-copolymere, Acrylnitril-Butadien-Styrolpolymerisate (ABS), Styrol-Acrylnitril (SAN), Acrylnitril-Styrol-Acrylester (ASA), Methylacrylat-Butadien-Styrol (MBS), Methylmethacrylat-Acrylnitril-Butadien-Styrol (MABS)-Polymerisate oder Mischungen davon oder mit Polyphenylenether (PPE) eingesetzt.

Bevorzugt werden Kunststoffteilchen, besonders bevorzugt Styrolpolymerisate oder Styrolcopolymerisate, insbesondere Styrolhomopolymerisate mit einem Molekulargewicht im Bereich von 70.000 bis 400.000 g/mol, besonders bevorzugt 190.000 bis 400.000 g/mol, ganz besonders bevorzugt 210.000 bis 400.000 g/mol eingesetzt. Diese expandierten Polystyrolteilchen oder expandierte Styrolcopolymerteilchen können ohne oder mit weiteren Maßnahmen zur Treibmittelverminderung zur Herstellung des lignocellulosehaltigen Stoffs weiterverwendet werden.

Üblicherweise weist das expandierbare Polystyrol oder expandierbare Styrolcopolymerisat oder das expandierte Polystyrol oder expandierte Styrolcopolymerisat eine antistatische Beschichtung auf.

Die expandierten Kunststoffteilchen der Komponente B) liegen in der Regel auch nach dem Verpressen zum Lignocellulosewerkstoff, in ungeschmolzenem Zustand vor, das bedeutet, dass die Kunststoffteilchen der Komponente B) in der Regel nicht in die Lignocelluloseteilchen eingedrungen sind oder diese imprägniert haben, sondern zwischen den Lignocelluloseteilchen verteilt sind. Üblicherweise lassen sich die Kunststoffteilchen der Komponente B) mit physikalischen Verfahren, zum Beispiel nach dem Zerkleinern des Lignocellulosewerkstoffs, von der Lignocellulose abtrennen.

Die Gesamtmenge der expandierten Kunststoffteilchen der Komponente B), bezogen auf Trockenmasse der Lignocellulosepartikel A) liegt in der Regel im Bereich von 0 bis 25 Gew.-%, vorzugsweise 0 bis 20 Gew.-%, besonders bevorzugt 0 bis 10 Gew.-%, insbesondere 0 Gew.-%.

Komponente C) und H)

Die Bindemittel der Komponente C) bzw. der Komponente H) können ausgewählt werden aus der Gruppe bestehend aus Aminoplastharz und organischem Isocyanat mit mindestens zwei Isocyanatgruppen, wobei gleiche oder unterschiedliche Bindemittel bzw. Bindemittelmischungen der Komponenten C) bzw. H), bevorzugt gleiche, besonders bevorzugt in beiden Fällen Aminoplastharz, verwendet werden. Die Gewichtsangabe bezieht sich bei Aminoplastharzen auf den Feststoffgehalt der entsprechenden Komponente (bestimmt durch Verdunsten des Wassers bei 120°C innerhalb von 2h nach Günter Zeppenfeld, Dirk Grunwald, Klebstoffe in der Holz- und Möbelindustrie, 2. Auflage, DRW-Verlag, Seite 268) und im Hinblick auf das Isocyanat, insbesondere das PMDI (Polymeres Diphenylmethandiisocyanat), auf die Isocyanatkomponente an sich, also zum Beispiel ohne Lösungsmittel oder Emulgiermedium.

Als Aminoplastharz können alle dem Fachmann, vorzugsweise die für die Herstellung von Holzwerkstoffen bekannten Aminoplastharze verwendet werden. Derartige Harze sowie ihre Herstellung sind beispielsweise in Ullmanns Enzyklopädie der technischen Chemie, 4., neubearbeitete und erweiterte Auflage, Verlag Chemie, 1973, Seiten 403 bis 424 "Aminoplaste" und Ullmann's Encyclopedia of Industrial Chemistry, Vol. A2, VCH Verlagsgesellschaft, 1985, Seiten 115 bis 141 "Amino Resins" sowie in M. Dunky, P. Niemz, Holzwerkstoffe und Leime, Springer 2002, Seiten 251 bis 259 (UF-Harze) und Seiten 303 bis 313 (MUF und UF mit geringer Menge Melamin) beschrieben. Es sind in der Regel Polykondensationsprodukte aus Verbindungen mit mindestens einer, gegebenenfalls teilweise mit organischen Resten substituierten, Aminogruppe oder Carbamidgruppe (die Carbamidgruppe wird auch Carboxamidgruppe genannt), bevorzugt Carbamidgruppe, bevorzugt Harnstoff oder Melamin, und einem Aldehyd, vorzugsweise Formaldehyd. Bevorzugte Polykondensationsprodukte sind Harnstoff-Formaldehydharze (UF-Harze), Melamin-Formaldehydharze (MF-Harze) oder melaminhaltige Harnstoff-Formaldehydharze (MUF-Harze), besonders bevorzugte Harnstoff-Formaldehydharze, beispielsweise Kaurit® Leim-Typen der Firma BASF SE.

Als organische Isocyanate eignen sich organische Isocyanate mit mindestens zwei Isocyanatgruppen oder deren Gemische, insbesondere alle dem Fachmann, vorzugsweise die für die Herstellung von Holzwerkstoffen oder Polyurethanen bekannten organischen Isocyanate oder deren Gemische. Derartige organische Isocyanate sowie ihre Herstellung und Anwendung sind beispielsweise in Becker/Braun, Kunststoff Handbuch, 3. neubearbeitete Auflage, Band 7 "Polyurethane", Hanser 1993, Seiten 17 bis 21, Seiten 76 bis 88 und Seiten 665 bis 671 beschrieben.

Bevorzugte organische Isocyanate sind oligomere Isocyanate mit 2 bis 10, vorzugsweise 2 bis 8 Monomer-Einheiten und im Mittel mindestens einer Isocyanatgruppe pro Monomer-Einheit oder deren Gemische. Die Isocyanate können entweder aliphatisch, cycloaliphatisch oder aromatisch sein. Besonders bevorzugt ist das organische Isocyanat MDI (Methylendiphenyldiisocyanat), das oligomere organische Isocyanat PMDI (Polymeres Methylendiphenylendiisocyanat), die erhältlich sind durch Kondensation von Formaldehyd mit Anilin und Phosgenierung der bei der Kondensation entstanden Isomeren und Oligomeren (siehe zum Beispiel Becker/Braun, Kunststoff Handbuch, 3. neubearbeitete Auflage, Band 7 "Polyurethane", Hanser 1993, Seiten 18 letzter Absatz bis Seite 19, zweiter Absatz und Seite 76, fünfter Absatz), oder Mischungen aus MDI und PMDI. Ganz besonders bevorzugt sind Produkte der LUPRANAT®-Typenreihe der BASF SE, insbesondere LUPRANAT® M 20 FB der BASF SE.

Das organische Isocyanat kann auch ein Isocyanat-terminiertes Prepolymer sein, das das Reaktionsprodukt eines Isocyanats, z.B. PMDI, mit einem oder mehreren Polyolen und/oder Polyaminen ist.

Es können Polyole verwendet werden, die aus der Gruppe Ethylenglykol, Diethylenglykol, Propylenglykol, Dipropylenglykol, Butandiol, Glycerin, Trimethylolpropan, Triethanolamin, Pentaerythrit, Sorbitol und Mischungen daraus, ausgewählt sind. Andere geeignete Polyole sind Biopolyole, wie Polyole aus Sojaöl, Rapsöl, Rizinusöl und Sonnenblumenöl. Geeignet sind auch Polyetherpolyole, die durch Polymerisierung von cyclischen Oxiden, wie zum Beispiel Ethylenoxid, Propylenoxid, Butylenoxid oder Tetrahydrofuran in der Gegenwart polyfunktioneller Initiatioren erhalten werden können. Geeignete Initiatoren enthalten aktive Wasserstoffatome und können Wasser, Butandiol, Ethylenglykol, Propylenglykol, Diethylenglykol, Triethylenglykol, Dipropylenglykol, Ethanolamin, Diethanolamin, Triethanolamin, Toluoldiamin, Diethyltoluoldiamin, Phenyldiamin, Diphenylmethandiamin, Ethylendiamin, Cyclohexandiamin, Cylcohexandimethanol, Resorcinol, Bisphenol A, Glycerin, Trimethylolpropan, 1,2,6-Hexantriol, Pentaerythrit, oder Gemische davon sein. Andere geeignete Polyetherpolyole umfassen Diole und Triole, wie beispielsweise Polyoxypropylendiole und -triole und Poly(oxyethylen-oxypropylen)diole und - triole, die durch gleichzeitige oder nacheinander erfolgende Additionsreaktionen von Ethylen- und Propylenoxiden mit di- oder trifunktionellen Initiatoren hergestellt werden. Geeignet sind auch Polyesterpolyole wie hydroxyterminierte Reaktionsprodukte von Polyolen, wie sie oben bereits beschrieben wurden, mit Polycarbonsäuren oder Polycarbonsäurederivaten, z. B. deren Anhydride, insbesondere Dicarbonsäuren oder Dicarbonsäurederivaten, beispielsweise Bernsteinsäure, Bernsteinsäuredimethylester, Glutarsäure, Glutarsäuredimethylester, Adipinsäure, Adipinsäuredimethylester, Sebacinsäure, Phthalsäureanhydrid, Tetrachlorophtalsäureanhydrid oder Dimethylterephthalat, oder Mischungen daraus.

Es können Polyamine verwendet werden, die aus der Gruppe Ethylendiamin, Toluoldiamin, Diaminodiphenylmethan, Polymethylenpolyphenylpolyamine, Aminoalkohole und Mischungen daraus, ausgewählt sind. Beispiele für Aminoalkohole sind Ethanolamin und Diethanolamin.

Das organische Isocyanat oder das Isocyanat-terminierte Prepolymer kann auch in Form einer wässrigen Emulsion verwendet werden, die beispielsweise durch Mischen mit Wasser in Gegenwart eines Emulgators hergestellt wird. Das organische Isocyanat bzw. die Isocyanatkomponente des Prepolymers können auch modifizierte Isocyanate sein, wie Carbodiimide, Allophanate, Isocyanurate und Biurete.

Besonders bevorzugt sind Polykondensationsprodukte, bei denen das molare Verhältnis Aldehyd zur gegebenenfalls teilweise mit organischen Resten substituierten Amino-Gruppe bzw. Carbamidgruppe im Bereich von 0,3:1 bis 1:1, bevorzugt 0,3:1 bis 0,6:1, besonders bevorzugt 0,3:1 bis 0,55:1, ganz besonders bevorzugt 0,3:1 bis 0,5:1 liegt. Werden die Aminoplaste in Kombination mit Isocyanaten eingesetzt, liegt das molare Verhältnis Aldehyd zur gegebenenfalls teilweise mit organischen Resten substituierten Amino-Gruppe bzw. Carbamidgruppe im Bereich von 0,3:1 bis 1:1, bevorzugt 0,3:1 bis 0,6:1, besonders bevorzugt 0,3:1 bis 0,45:1, ganz besonders bevorzugt 0,3:1 bis 0,4:1.

Die genannten Aminoplastharze werden üblicherweise in flüssiger Form, üblicherweise als 25 bis 90 gew.-%ige, vorzugsweise als 50 bis 70 gew.-%ige Lösung, vorzugsweise in wässriger Lösung eingesetzt, können aber auch als Feststoff eingesetzt werden.

Der Feststoffgehalt des flüssigen wässrigen Aminoplast-Harzes kann nach Günter Zeppenfeld, Dirk Grunwald, Klebstoffe in der Holz- und Möbelindustrie, 2. Auflage, DRW-Verlag, Seite 268 bestimmt werden.

Die Bestandteile des Bindemittels der Komponente C) und des Bindemittels der Komponente H) können für sich alleine eingesetzt werden, also zum Beispiel Aminoplastharz oder organisches Isocyanat als einziger Bestandteil des Bindemittels der Komponente C) oder des Bindemittels der Komponente H). Die Harzbestandteile des Bindemittels der Komponente C) bzw. des Bindemittels der Komponente H) können aber auch als Kombination zweier oder mehrerer Bestandteile des Bindemittels der Komponente C) bzw. des Bindemittels der Komponente H) eingesetzt werden. In einer bevorzugten Ausführungsform wird für den Kern als Komponente C) und für die Deckschichten als Komponente H) jeweils ein Aminoplastharz oder eine Kombination mehrerer Aminoplastharze eingesetzt. In einer besonders bevorzugten Ausführungsform wird für den Kern als Komponente C) eine Kombination aus einem oder mehrerer Aminoplastharze und Isocyanat und für die Deckschichten als Komponente H) ein Aminoplastharz oder eine Kombination mehrerer Aminoplastharze eingesetzt.

Die Gesamtmenge des Bindemittels der Komponente C), bezogen auf die Trockenmasse der Lingocellulosepartikel A) in der Mischung für den Kern liegt im Bereich von 1 bis 15 Gew.-%, vorzugsweise 2 bis 12 Gew.-%, besonders bevorzugt 3 bis 10 Gew.-%.

Werden die Bestandteile des Bindemittels der Komponente C) nur aus der Gruppe der Aminoplastharze ausgewählt, liegt die Gesamtmenge des Bindemittels der Komponente C) bezogen auf die Trockenmasse der Lignocellulosepartikel A) in der Mischung für den Kern im Bereich von 5 bis 15 Gew.-%, vorzugsweise 6 bis 12 Gew.-%, besonders bevorzugt 7 bis 10 Gew.-%.

Werden die Bestandteile des Bindemittels der Komponente C) nur aus der Gruppe der Isocyanate ausgewählt liegt die Gesamtmenge des Bindemittels der Komponente C) bezogen auf die Trockenmasse der Lingocellulosepartikel A) in der Mischung für den Kern im Bereich von 1 bis 6 Gew.-%, vorzugsweise 2 bis 5 Gew.-%, besonders bevorzugt 3 bis 4 Gew.-%.

Werden die Bestandteile des Bindemittels der Komponente C) aus der Gruppe der Aminoplastharze und aus der Gruppe der Isocyanate ausgewählt (also Kombinationen aus Aminoplastharz und Isocyanat eingesetzt), liegt die Gesamtmenge des Bindemittels der Komponente C) bezogen auf die Trockenmasse der Lingocellulosepartikel A) in der Mischung für den Kern im Bereich von 4 bis 15 Gew.-%, vorzugsweise 5 bis 12 Gew.-%, besonders bevorzugt 6 bis 10 Gew.-%. Für diesen Fall liegt die Gesamtmenge des Isocyanats im Bindemittel der Komponente C) bezogen auf die Trockenmasse der Lignocellulosepartikel A) im Bereich von 0,05 bis 3,5 Gew.-%, vorzugsweise 0,1 bis 2 Gew.-%, besonders bevorzugt 0,3 bis 1 Gew.-%.

Die Gesamtmenge des Bindemittels der Komponente H), bezogen auf die Trockenmasse der Lignocellulosepartikel G) in der/den Mischung(en) für die Deckschicht(en) liegt im Bereich von 1 bis 15 Gew.-%, vorzugsweise 2 bis 14 Gew.-%, besonders bevorzugt 3 bis 12 Gew.-%.

Werden die Bestandteile des Bindemittels der Komponente H) nur aus der Gruppe der Aminoplastharze ausgewählt, liegt die Gesamtmenge des Bindemittels der Komponente H) bezogen auf die Trockenmasse der Lingocellulosepartikel G) in der/den Mischung(en) für die Deckschicht(en) im Bereich von 6 bis 15 Gew.-%, vorzugsweise 7 bis 14 Gew.-%, besonders bevorzugt 8 bis 12 Gew.-%.

Werden die Bestandteile des Bindemittels der Komponente H) nur aus der Gruppe der Isocyanate ausgewählt liegt die Gesamtmenge des Bindemittels der Komponente H) bezogen auf die Trockenmasse der Lingocellulosepartikel G) in der/den Mischung(en) für die Deckschicht(en) im Bereich von 1 bis 6 Gew.-%, vorzugsweise 2 bis 5 Gew.-%, besonders bevorzugt 3 bis 4 Gew.-%.

Werden die Bestandteile des Bindemittels der Komponente H) aus der Gruppe der Aminoplastharze und aus der Gruppe der Isocyanate ausgewählt (also Kombinationen aus Aminoplastharz und Isocyanat eingesetzt), liegt die Gesamtmenge des Bindemittels der Komponente H) bezogen auf die Trockenmasse der Lingocellulosepartikel G) in der/den Mischung(en) für die Deckschicht(en) im Bereich von 5 bis 15 Gew.-%, vorzugsweise 6 bis 14 Gew.-%, besonders bevorzugt 7 bis 12 Gew.-%. Für diesen Fall liegt die Gesamtmenge des Isocyanats im Bindemittel der Komponente H) bezogen auf die Trockenmasse der Lignocellulosepartikel G) im Bereich von 0,05 bis 3,5 Gew.-%, vorzugsweise 0,1 bis 2 Gew.-%, besonders bevorzugt 0,3 bis 1 Gew.-%.

Komponente D) und I)

Als Komponenten D) und I) werden jeweils unabhängig voneinander unterschiedliche oder gleiche, bevorzugt gleiche, dem Fachmann bekannte Ammoniumsalze oder deren Gemische eingesetzt. Bevorzugt werden diese Ammoniumsalze dem Bindemittel Komponente C) bzw. der Komponente H) zugesetzt, bevor sie mit den Lignocellulosepartikel A) bzw. G) in Kontakt gebracht werden.

Geeignete Ammoniumsalze sind beispielsweise Ammoniumchlorid, Ammoniumhydrogensulfat, Ammoniumsulfat oder Ammoniumnitrat. Bevorzugt werden Ammoniumsulfat oder Ammoniumnitrat, besonders bevorzugt Ammoniumnitrat eingesetzt.

Die Komponenten D) und I) werden in Mengen von 0 bis 3 Gew.-%, bevorzugt 0 bis 2 Gew.-%, besonders bevorzugt 0 bis 1,5 Gew.-% eingesetzt.

Ist in der Komponente C) ein oder mehrere Bindemittel aus der Gruppe der Aminoplastharze enthalten, dann wird die Komponente D) bevorzugt in einer Mengen von 0,1 bis 3 Gew.-%, besonders bevorzugt 0,3 bis 2 Gew.-%, besonders bevorzugt 0,5 bis 1,5 Gew.-% eingesetzt.

Ist in der Komponente H) ein oder mehrere Bindemittel aus der Gruppe der Aminoplastharze enthalten, dann wird die Komponente I) bevorzugt in einer Mengen von 0,1 bis 3 Gew.-%, besonders bevorzugt 0,3 bis 2 Gew.-%, besonders bevorzugt 0,5 bis 1,5 Gew.-% eingesetzt.

Komponente E) und J)

Die Komponenten E) bzw. J) können weitere handelsübliche und dem Fachmann bekannte Additive als Komponente E) bzw. Komponente J) unabhängig voneinander gleiche oder verschiedene, bevorzugt gleiche Additive in Mengen von 0 bis 5 Gew.-%, bevorzugt 0 bis 3 Gew.-%, besonders bevorzugt 0 bis 1,5 Gew.-% enthalten, mit der Maßgabe, dass diese Komponenten keine der Bedeutungen einer der anderen Komponenten A), B), C), D), F), G), H), I) oder K) haben, z.B. Hydrophobierungsmittel wie Paraffin-Emulsionen, zusätzliche Härter, Pigmente, zum Beispiel Ruß, Pilzschutzmittel, Formaldehydfänger, zum Beispiel Harnstoff oder Polyamine.

Unter zusätzlichen Härtern (also Härter die zusätzlich zu den Ammoniumsalzen der Komponenten D) und I) eingesetzt werden) sind hierin alle chemischen Verbindungen jeglichen Molekulargewichts zu verstehen, welche die Polykondensation von Aminoplastharz bewirken oder beschleunigen. Eine gut geeignete Gruppe der zusätzlichen Härter für Aminoplastharz sind organische und anorganische Säuren, zum Beispiel Schwefelsäure, Ameisensäure, Maleinsäure oder säureregenerierende Substanzen, wie Aluminiumchlorid, Aluminiumsulfat oder deren Gemische. Werden zusätzliche Härter eingesetzt, so ist der Gewichtsanteil in Gew.-% bezogen auf die Lignocellulosepartikel A) im Kern größer als der Gewichtsanteil in Gew.-% bezogen auf die Lignocellulosepartikel G) in den Deckschichten.

Komponente F) und K)

Die Komponente F) und die Komponente K) können unabhängig voneinander ausgewählt werden aus der Gruppe der Alkali- oder Erdalkalisalze aus der Gruppe der Sulfate, Nitrate, Halogenide oder deren Gemische. Sowohl die Mischungen für den Kern als auch die Mischungen für die Deckschichten enthalten 0,1 bis 3 Gew.-%, bevorzugt 0,2 bis 2,5 Gew.-%, besonders bevorzugt 0,25 bis 2 Gew.-% Alkali- oder Erdalkalisalze aus der Gruppe der Sulfate, Nitrate, Halogenide oder deren Gemische als Komponente F) bzw. als Komponente K).

Als Alkali- oder Erdalkalisalze aus der Gruppe der Sulfate, Nitrate oder Halogenide eignen sich beispielsweise Lithiumsulfat, Lithiumhydrogensulfat, Lithiumnitrat, Lithiumchlorid, Lithiumbromid, Natriumsulfat, Natriumhydrogensulfat, Natriumnitrat, Natriumchlorid, Natriumbromid, Kaliumsulfat, Kaliumhydrogensulfat, Kaliumnitrat, Kaliumchlorid, Kaliumbromid, Magnesiumsulfat, Magnesiumhydrogensulfat, Magnesiumnitrat, Magnesiumchlorid, Magnesiumbromid, Calciumsulfat, Calciumhydrogensulfat, Calciumnitrat, Calciumchlorid, Calciumbromid oder deren Gemische, bevorzugt Lithiumsulfat, Lithiumnitrat, Lithiumchlorid, Natriumsulfat, Natriumnitrat, Natriumchlorid, Kaliumsulfat, Kaliumnitrat, Kaliumchlorid oder deren Gemische, besonders bevorzugt Lithiumsulfat, Lithiumnitrat, Natriumsulfat, Natriumnitrat, Kaliumsulfat, Kaliumnitrat oder deren Gemische, insbesondere Natriumsulfat, Natriumnitrat oder deren Gemische, ganz besonders bevorzugt Natriumnitrat.

Die Alkali- oder Erdalkalisalze aus der Gruppe der Sulfate, Nitrate oder Halogenide werden in der Regel als Lösung oder Feststoff, bevorzugt als Lösung eingesetzt. In einer weiteren besonderen Ausführungsform werden die Salze mit dem Bindemittel, wenn es sich bei dem Bindemittel um ein wässriges Bindemittel handelt, z.B. Aminoplastharz, gemischt. Das kann entweder durch Zugabe von Salzlösung oder als Feststoff, z.B. in Form von Salzpulver oder Salzgranulat, besonders bevorzugt als Feststoff, und anschließendem Mischen erfolgen.

Verwendung:

Mit dem erfindungsgemäßen Verfahren, das in dem Anspruch 1 definiert ist, lassen sich ein- und mehrschichtige Lignocellulosewerkstoffe unterschiedlicher Art herstellen, besonders bevorzugt sind ein- und mehrschichtige Span- und Faserplatten, ganz besonders bevorzugt einschichtige Span- und Faserplatten, insbesondere einschichtige Spanplatten.

Die Gesamtdicke der mehrschichtigen Lignocellulosewerkstoffe variiert mit dem Anwendungsgebiet und liegt in der Regel im Bereich von 0,5 bis 100 mm, vorzugsweise im Bereich von 10 bis 40 mm, insbesondere 15 bis 20 mm.

Die mehrschichtigen Lignocellulosewerkstoffe haben in der Regel eine mittlere Gesamtdichte von 100 bis 700 $kg/m^3$, bevorzugt 150 bis 490 $kg/m^3$, besonders bevorzugt 200 bis 440 $kg/m^3$, insbesondere 250 bis 390 $kg/m^3$. Die Dichte wird 24 h Stunden nach Herstellung gemäß EN 1058 bestimmt.

Die mehrschichtigen Lignocellulosewerkstoffe weisen in der Regel eine nahezu homogene Dichteverteilung senkrecht zur Plattenebene auf. Das Dichteprofil einer Platte lässt sich über die Absorption eingestrahlter Röntgenstrahlung, beispielsweise mit dem Dichteprofilmessgerät DAX 5000 der Firma Grecon, bestimmen. Die Differenz zwischen Dichtemaximum in den Deckschichten und Dichteminimum im Kern beträgt höchstens 100 $kg/m^3$, bevorzugt 0 bis 75 $kg/m^3$, besonders bevorzugt 0 bis 50 $kg/m^3$, insbesondere 0 bis 25 $kg/m^3$.

Die erfindungsgemäßen einschichtigen Lingocellulosewerkstoffe weisen ebenfalls eine nahezu homogene Dichteverteilung senkrecht zur Plattenebene auf. Die Differenz zwischen maximaler Dichte und minimaler Dichte in der Platte beträgt höchstens 100 $kg/m^3$, bevorzugt 0 bis 75 $kg/m^3$, besonders bevorzugt 0 bis 50 $kg/m^3$, insbesondere 0 bis 25 $kg/m^3$.

Die nach dem erfindungsgemäßen Verfahren hergestellten Lignocellulosewerkstoffe, insbesondere einschichtige Spanplatten und einschichtige Faserplatten, werden vor allem im Bau, im Innenausbau, im Laden- und Messebau, als Material für Möbel und als Verpackungsmaterial verwendet.

In einer bevorzugten Verwendung, werden die nach dem erfindungsgemäßen Verfahren hergestellten Lignocellulosewerkstoffe werden als Innenlagen für Sandwichplatten eingesetzt. Dabei können die Außenlagen der Sandwichplatten aus unterschiedlichen Werkstoffen bestehen, beispielsweise aus Metall wie Aluminium oder Edelstahl, oder aus dünnen Holzwerkstoffplatten, wie Spanplatten oder Faserplatten, bevorzugt hochverdichtete Faserplatten (HDF), oder aus Laminaten wie zum Beispiel High Pressure Laminate (HPL), oder aus Möbelfolien oder aus Melaminfilmen oder aus Furnieren.

Im Bau, Innenausbau und Laden- und Messebau werden die nach dem hergestellten Lignocellulosewerkstoffe oder die aus diesen Lignocellulosewerkstoffen hergestellten Sandwichplatten beispielsweise als Dach- und Wandbeplankungen, Ausfachungen, Verschalungen, Fußböden, Türeninnenlagen, Trennwände oder Regalböden verwendet.

Im Möbelbau werden die nach dem erfindungsgemäßen Verfahren hergestellten Lignocellulosewerkstoffe oder die aus diesen Lignocellulosewerkstoffen hergestellten Sandwichplatten beispielsweise als Trägermaterial für Kastenmöbel, als Regalboden, als Türenmaterial, als Arbeitsplatte, als Küchenfront, als Elemente in Tischen, Stühlen und Polstermöbel eingesetzt.

Beispiele

Erfindungsgemäße Spanplatten

Materialmischung 1 für Spanplatte 1

459 g Kaurit® Leim 347 (BASF SE, Feststoffgehalt 67%) wurden mit 34,0 g Natriumnitrat, 22,5 g 40%iger Ammoniumnitratlösung, 50,0 g HydroWax® 140 (Sasol, Feststoffgehalt 60 %) und 75,6 g Wasser unter Rühren gemischt. Diese Mischung wurde in einem Schaufelmischer zu 3099 g (3000 g atro, 99 g Feuchte) Fichtenspänen gegeben und gemischt. Der Wassergehalt der fertigen Mischung nach der Darrmethode betrug 9,5%.

Materialmischung 2 für Spanplatten 2 bis 4

412 g Kaurit® Leim 347 (BASF SE, Feststoffgehalt 67%) wurden mit 30,5 g Natriumnitrat, 20,3 g 40%iger Ammoniumnitratlösung, 50,0 g HydroWax® 140 (Sasol, Feststoffgehalt 60 %) und 89,4 g Wasser unter Rühren gemischt. Diese Mischung wurde in einem Schaufelmischer zu 3069 g (3000 g atro, 69 g Feuchte) Fichtenspänen gegeben und gemischt. Der Wassergehalt der fertigen Mischung nach der Darrmethode betrug 9,9%.

Bestimmung des dielektrischen Verlustes

Von der Materialmischung 1 wurde der dielektrische Verlust bestimmt. Dazu wurde die Mischung in eine Messkammer gefüllt, die aus einem äußeren Metallzylinder und einem inneren Metallzylinder besteht. Der Aufbau entspricht dem eines Zylinderkondensators, wobei die Grundflächen des äußeren und des inneren Zylinders in derselben Ebene liegen und die beiden zylindrischen Oberflächen (Innenseite des äußeren und Außenseite des inneren Zylinders) koaxial sind. Die zu prüfende Mischung wird in den ringförmigen Zwischenraum gefüllt, der zwischen dem äußeren (Durchmesser der Innenseite 9,5 cm) und dem inneren Metallzylinder (Durchmesser 5 cm) liegt. Die Höhe der Füllung beträgt 11,9 cm. An den Zylinderkondensator wird ein elektrisches Wechselfeld angelegt und die dielektrische Antwort bei unterschiedlichen Frequenzen (1 kHz, 10 kHz, 100 kHz, 1 MHz, 10 MHz) durch Messen des durch die Materialmischung fließenden Stroms bestimmt. Dazu wurde ein Impedanzanalysator von Hewlett-Packard des Typs HP 4192A LF verwendet. Durch Extrapolation wurde für beide Mischungen der dielektrische Verlust $\varepsilon''$ bei 27,12 MHz bestimmt.

$\varepsilon''$ (Mischung 1) = 0,0258

Herstellung der erfindungsgemäßen Spanplatten

Es wurden x g der Mischung 1 in einen Streurahmen (46 x 44 cm) gestreut. Die gestreute Matte wurde in einer Oberkolbenpresse bei Raumtemperatur für 60 Sekunden bei einem spezifischen Pressdruck von 10 bar im Streurahmen vorverdichtet. Dabei wurde die Matte von y mm (Höhe nach dem Streuen) auf z mm verdichtet. Anschließend wurde der Streurahmen entfernt. Zur Überwachung des Temperaturverlaufs in der Plattenmitte und in der Mitte der Deckschichten wurden optische Sensoren jeweils in ein horizontales Loch im Mittelpunkt der Deckschichten und des Kerns in die Schmalfläche der Matte eingeführt. Anschließend wurde die Matte mit Trennvliesen auf Ober- und Unterseite versehen und in der Presse HLOP 170 der Firma Hoefer Presstechnik GmbH innerhalb von 2 s auf 17,5 mm (Spanplatte 1) bzw. 20 mm (Spanplatte 2 bis 4) verdichtet und anschließend durch Anlegen eines hochfrequenten Wechselfelds (27,12 MHz) erwärmt. Nach der Zeit t wurde die Temperatur T im Kern gemessen und die Presse geöffnet. Nach Klimatisierung (bei 65% Luftfeuchte und 20°C) bis zur Massekonstanz wurden die Dicken, die Dichten (gemäß EN 1058) und die Querzugsfestigkeiten (gemäß EN 319) der so hergestellten Spanplatten bestimmt.

| | Spanplatte 1 | Spanplatte 2 | Spanplatte 3 | Spanplatte 4 |
|---|---|---|---|---|
| x [g] | 2508 | 2407 | 1955 | 1517 |
| y [mm] | 120 | 105 | 90 | 65 |
| z [mm] | 55 | 55 | 40 | 30 |
| z in HF [mm] | 17,5 | 20 | 20 | 20 |
| T [°C] | 130 | 130 | 130 | 130 |
| t [s] | 96 | 126 | 116 | 102 |
| Dicke [mm] | 17,9 | 19,8 | 19,5 | 19,2 |
| Dichte [kg/m$^3$] | 670 | 589 | 479 | 381 |
| Querzugfestigkeit [N/mm$^2$] | 1,31 | 1,00 | 0,69 | 0,35 |

Referenzspanplatte

Materialmischung 3

459 g Kaurit® Leim 347 (BASF SE, Feststoffgehalt 67%), 22,5 g 40%iger Ammoniumnitratlösung, 50,0 g HydroWax® 140 (Sasol, Feststoffgehalt 60%) und 75,6 g Wasser unter Rühren gemischt. Diese Mischung wurde in einem Schaufelmischer zu 3099 g (3000 g atro, 99 g Feuchte) Fichtenspänen gegeben und gemischt. Der Wassergehalt der fertigen Mischung nach der Darrmethode betrug 9,7%.

Herstellung der Referenzspanplatte

Es wurden 2513 g der Mischung 3 in einen Streurahmen (46 x 44 cm) gestreut. Die gestreute Matte wurde in einer Oberkolbenpresse bei Raumtemperatur für 60 Sekunden bei einem spezifischen Pressdruck von 10 bar im Streurahmen vorverdichtet. Dabei wurde mit Matte von 100 mm (Höhe nach dem Streuen) auf 50 mm verdichtet. Anschließend wurde der Streurahmen entfernt. Anschließend wurde die Matte mit Trennvliesen auf Ober- und Unterseite versehen und in der Presse HLOP 170 der Firma Hoefer Presstechnik GmbH innerhalb von 2 s auf 20 mm kalt vorverdichtet. Die Matte wurde mittels einer automatischen Übergabe in eine Heißpresse der Firma Höfer geschoben. Dort wurde bei einer Temperatur von 227°C auf 17,5 mm Dicke gepresst (Presszeit 175 s).

Nach Klimatisierung (65% Luftfeuchte und 20°C) bis zur Massekonstanz wurden die Dicke, die Dichte (gemäß EN 1058) und die Querzugsfestigkeit (gemäß EN 319) der so hergestellten Spanplatte gemäß EN 319 bestimmt.

Dicke = 17,9 mm

Dichte = 678 kg/m$^3$

Querzugfestigkeit = 0,93 N/mm$^2$

## Patentansprüche

1. Verfahren zur diskontinuierlichen oder kontinuierlichen Herstellung von einschichtigen plattenförmigen Lignocellulosewerkstoffen oder von mehrschichtigen plattenförmigen Lignocellulosewerkstoffen mit einem Kern und mindestens einer oberen und einer unteren Deckschicht

   enthaltend die Verfahrensschritte

   a) Mischen der Komponenten der einzelnen Schicht(en),
   b) Schichtweises Streuen der Mischungen zu einer Matte,
   c) Verdichtung nach dem Streuen der einzelnen Schicht(en),
   d) Anlegen eines hochfrequenten elektrischen Feldes während und/oder nach der Verdichtung und thermische Aushärtung des/der Bindemittel(s),
   e) anschließend gegebenenfalls Heißpressen und
   f) Abkühlen des Lignocellulosewerkstoffes,

   wobei man im Verfahrensschritt a)
   für den Kern bzw. die einzige Schicht die Lignocellulosepartikel A) [Komponente A)] mit

   B) 0 bis 25 Gew.-% expandierte Kunststoffteilchen mit der Schüttdichte im Bereich von 10 bis 150 kg/m$^3$ [Komponente B)],
   C) 1 bis 15 Gew.-% eines oder mehrerer Bindemittel ausgewählt aus der Gruppe bestehend aus Aminoplastharz und organischem Isocyanat mit mindestens zwei Isocyanatgruppen [Komponente C)],
   D) 0 bis 3 Gew.-% Ammoniumsalze [Komponente D)],
   E) 0 bis 5 Gew.-% Additive [Komponente E)] und
   F) 0,1 bis 3 Gew.-% Alkali- oder Erdalkalisalze aus der Gruppe der Sulfate, Nitrate, Halogenide oder deren Gemische [Komponente F)],

   ggf. für die Deckschichten die Lignocellulosepartikel G) [Komponente G)] mit

   H) 1 bis 15 Gew.-% eines oder mehrerer Bindemittel ausgewählt aus der Gruppe bestehend aus Aminoplastharz und organischem Isocyanat mit mindestens zwei Isocyanatgruppen [Komponente H)],
   I) 0 bis 2 Gew.-% Ammoniumsalze [Komponente I)],
   J) 0 bis 5 Gew.-% Additive [Komponente J)] und
   K) 0,1 bis 3 Gew.-% Alkali- oder Erdalkalisalze aus der Gruppe der Sulfate, Nitrate, Halogenide oder deren Gemische [Komponente K)]

   vermischt, wobei zum Zeitpunkt Z die Schicht des Kerns bzw. die einzige Schicht eine Temperatur von mindestens 90°C aufweist und diese Temperatur in weniger als 40 s/mm • d ab dem Anlegen des hochfrequenten elektrischen Feldes erreicht wird, wobei d die Dicke des plattenförmigen Lignocellulosewerkstoffes in mm zum Zeitpunkt Z ist.

2. Verfahren zur Herstellung von ein- oder mehrschichtigen Lignocellulosewerkstoffen nach Anspruch 1, **dadurch gekennzeichnet, dass** man das Verfahren kontinuierlich durchführt.

3. Verfahren zur Herstellung von ein- oder mehrschichtigen Lignocellulosewerkstoffen nach einem der Ansprüche 1 oder 2, **dadurch gekennzeichnet, dass** man das Verfahren zur Herstellung von einschichtigen Lignocellulosewerkstoffen einsetzt.

**4.** Verfahren zur Herstellung von ein- oder mehrschichtigen Lignocellulosewerkstoffen nach einem der Ansprüche 1 bis 3, **dadurch gekennzeichnet, dass** zum Zeitpunkt Z die Schicht des Kerns bzw. die einzige Schicht eine Temperatur von 90 bis 170°C aufweist.

**5.** Verfahren zur Herstellung von mehr- oder einschichtigen Lignocellulosewerkstoffen nach einem der Ansprüche 1 bis 4, **dadurch gekennzeichnet, dass** die Lignocellulosewerkstoffe im Kern bzw. in der einzigen Schicht 0,2 bis 2,5 Gew.-% Komponente F) enthält.

**6.** Verfahren zur Herstellung von mehr- oder einschichtigen Lignocellulosewerkstoffen nach einem der Ansprüche 1 bis 5, **dadurch gekennzeichnet, dass** die Lignocellulosewerkstoffe eine Dichte von 100 bis 700 kg/m$^3$, bevorzugt 150 bis 490 kg/m$^3$, besonders bevorzugt 200 bis 440 kg/m$^3$, insbesondere 250 bis 390 kg/m$^3$ besitzen.

**7.** Verfahren zur Herstellung von mehrschichtigen Lignocellulosewerkstoffen nach einem der Ansprüche 1 bis 6, **dadurch gekennzeichnet, dass** die Bedingung
Komponente F) $\geq$ 1,1 • Komponente K) erfüllt ist.

**8.** Verfahren zur Herstellung von mehrschichtigen Lignocellulosewerkstoffen nach einem der Ansprüche 1 bis 7, **dadurch gekennzeichnet, dass** die Bedingung
[Komponente F) + Komponente D)] $\geq$ 1,1 • [Komponente K) + Komponente I)] erfüllt ist.

**9.** Verfahren zur Herstellung von mehrschichtigen Lignocellulosewerkstoffen nach einem der Ansprüche 1 bis 6 und 8, **dadurch gekennzeichnet, dass** die Bedingung Komponente F) $\leq$ 1,1 • Komponente K) erfüllt ist.

**10.** Verfahren zur Herstellung von mehrschichtigen Lignocellulosewerkstoffen nach einem der Ansprüche 1 bis 7 und 9, **dadurch gekennzeichnet, dass** die Bedingung [Komponente F) + Komponente D)] $\leq$ 1,1 • [Komponente K) + Komponente I)] erfüllt ist.

**11.** Ein- oder mehrschichtige Lignocellulosewerkstoffe, hergestellt durch ein Verfahren zur diskontinuierlichen oder kontinuierlichen, bevorzugt kontinuierlichen Herstellung von einschichtigen plattenförmiger Lignocellulosewerkstoffen oder von mehrschichtigen plattenförmiger Lignocellulosewerkstoffen mit einem Kern und mindestens einer oberen und einer unteren Deckschicht nach Anspruch 1 bis 10
enthaltend die Verfahrensschritte

a) Mischen der Komponenten der einzelnen Schicht(en),
b) Schichtweises Streuen der Mischungen zu einer Matte,
c) Verdichtung nach dem Streuen der einzelnen Schicht(en),
d) Anlegen eines hochfrequenten elektrischen Feldes während und/oder nach der Verdichtung und thermische Aushärtung des/der Bindemittel,
e) anschließend gegebenenfalls Heißpressen und
f) Abkühlen des Lignocellulosewerkstoffes,

wobei man im Verfahrensschritt a)
für den Kern bzw. die einzige Schicht die Lignocellulosepartikel A) [Komponente A)] mit

B) 0 bis 25 Gew.-% expandierte Kunststoffteilchen mit der Schüttdichte im Bereich von 10 bis 150 kg/m$^3$ [Komponente B)],
C) 1 bis 15 Gew.-% eines oder mehrerer Bindemittel ausgewählt aus der Gruppe bestehend aus Aminoplastharz und organischem Isocyanat mit mindestens zwei Isocyanatgruppen [Komponente C)],
D) 0 bis 3 Gew.-% Ammoniumsalze [Komponente D)],
E) 0 bis 5 Gew.-% Additive [Komponente E)] und
F) 0,1 bis 3 Gew.-% Alkali- oder Erdalkalisalze aus der Gruppe der Sulfate, Nitrate, Halogenide oder deren Gemische [Komponente F)],

ggf. für die Deckschichten die Lignocellulosepartikel G) [Komponente G)] mit

H) 1 bis 15 Gew.-% eines oder mehrerer Bindemittel ausgewählt aus der Gruppe bestehend aus Aminoplastharz,

und organischem Isocyanat mit mindestens zwei Isocyanatgruppen [Komponente H)],
I) 0 bis 2 Gew.-% Ammoniumsalze [Komponente I)],
J) 0 bis 5 Gew.-% Additive [Komponente J)] und
K) 0,1 bis 3 Gew.-% Alkali- oder Erdalkalisalze aus der Gruppe der Sulfate, Nitrate, Halogenide oder deren Gemische [Komponente K)]

vermischt, wobei zum Zeitpunkt Z die Schicht des Kerns bzw. die einzige Schicht eine Temperatur von mehr als 90°C aufweist und diese Temperatur in weniger als 40 s/mm • d ab dem Anlegen des hochfrequenten elektrischen Feldes erreicht wird, wobei d die Dicke des plattenförmigen Lignocellulosewerkstoffes in mm zum Zeitpunkt Z ist.

12. Ein- oder mehrschichtige Lignocellulosewerkstoffe mit einem Kern und gegebenenfalls mindestens einer oberen und einer unteren Deckschicht gefunden, in denen der Kern bzw. die einzige Schicht bezogen auf die Lignocellulosepartikel A) [Komponente A)] die Komponenten

B) 0 bis 25 Gew.-% expandierte Kunststoffteilchen mit der Schüttdichte im Bereich von 10 bis 150 kg/m$^3$ [Komponente B)],
C) 1 bis 15 Gew.-% eines oder mehrerer Bindemittel ausgewählt aus der Gruppe bestehend aus Aminoplastharz und organischem Isocyanat mit mindestens zwei Isocyanatgruppen [Komponente C)],
D) 0 bis 3 Gew.-% Ammoniumsalze [Komponente D)],
E) 0 bis 5 Gew.-% Additive [Komponente E)] und
F) 0,1 bis 3 Gew.-% Alkali- oder Erdalkalisalze aus der Gruppe der Sulfate, Nitrate, Halogenide oder deren Gemische [Komponente F)],

und ggf. für die Deckschichten bezogen auf die Lignocellulosepartikel G) [Komponente G)] die Komponenten

H) 1 bis 15 Gew.-% eines oder mehrerer Bindemittel ausgewählt aus der Gruppe bestehend aus Aminoplastharz, und organischem Isocyanat mit mindestens zwei Isocyanatgruppen [Komponente H)],
I) 0 bis 2 Gew.-% Ammoniumsalze [Komponente I)],
J) 0 bis 5 Gew.-% Additive [Komponente J)] und
K) 0,1 bis 3 Gew.-% Alkali- oder Erdalkalisalze aus der Gruppe der Sulfate, Nitrate, Halogenide oder deren Gemische [Komponente K)]

enthalten.

13. Ein- oder mehrschichtige Lignocellulosewerkstoffe nach einem der Ansprüche 11 oder 12, **dadurch gekennzeichnet, dass** die Lignocellulosewerkstoffe im Kern bzw. in der einzigen Schicht 0,2 bis 2,5 Gew.-% Komponente F) enthält.

14. Mehrschichtige Lignocellulosewerkstoffe nach den Ansprüchen 11 bis 13, **dadurch gekennzeichnet, dass** sie eine nahezu homogene Dichteverteilung senkrecht zur Plattenebene aufweisen und die Differenz zwischen Dichtemaximum in den Deckschichten und Dichteminimum im Kern höchstens 100 kg/m$^3$ beträgt.

15. Einschichtige Lignocellulosewerkstoffe nach den Ansprüchen 11 bis 13, **dadurch gekennzeichnet, dass** sie eine nahezu homogene Dichteverteilung senkrecht zur Plattenebene aufweisen und die Differenz zwischen Dichtemaximum und Dichteminimum im einschichtigen Lignocellulosewerkstoff höchstens 100 kg/m$^3$ beträgt.

16. Verwendung der ein- und mehrschichtigen Lignocellulosewerkstoffe gemäß einem der Ansprüche 11 bis 15 oder erhalten durch ein Verfahren gemäß einem der Ansprüche 1 bis 10 im Bau, im Innenausbau, im Laden- und Messebau, als Material für Möbel oder als Verpackungsmaterial.

17. Verwendung der ein- oder mehrschichtigen Lignocellulosewerkstoffe gemäß einem der Ansprüche 11 bis 15 oder erhalten durch ein Verfahren gemäß einem der Ansprüche 1 bis 10 als Innenlage für Sandwichplatten.

18. Verwendung der ein- und mehrschichtigen Lignocellulosewerkstoffe gemäß einem der Ansprüche 1 bis 15 und der Sandwichplatte gemäß Anspruch 17 als Dach- und Wandbeplankungen, Ausfachungen, Verschalungen, Fußböden, Türeninnenlagen, Trennwände, Regalböden oder als Trägermaterial für Kastenmöbel, als Regalboden, als Türenmaterial, als Arbeitsplatte, als Küchenfront, als Decklagen in Sandwichkonstruktionen, als Elemente in Tischen, Stühlen und Polstermöbel.

**Claims**

1. A process for the batchwise or continuous production of single-layer lignocellulose-based boards or of multilayer lignocellulose-based boards with a core and with at least one upper and one lower outer layer, comprising the following steps:

   a) mixing of the components of the individual layer(s),
   b) layer-by-layer scattering of the mixtures to give a mat,
   c) compaction after the scattering of the individual layer(s),
   d) application of a high-frequency electrical field during and/or after the compaction and thermal hardening of the binder(s),
   e) then optionally hot pressing, and
   f) cooling the lignocellulose material,

   where, in step a),
   for the core or the single layer, the lignocellulose particles A) [component A)] are mixed with

   B) from 0 to 25% by weight of expanded plastics particles with bulk density in the range from 10 to 150 kg/m$^3$ [component B)],
   C) from 1 to 15% by weight of one or more binders selected from the group consisting of aminoplastic resin and organic isocyanate having at least two isocyanate groups [component C)],
   D) from 0 to 3% by weight of ammonium salts [component D)],
   E) from 0 to 5% by weight of additives [component E)] and
   F) from 0.1 to 3% by weight of alkali metal salts or alkaline earth metal salts from the group of the sulfates, nitrates, halides and mixtures of these [component F)],

   and optionally for the outer layers, the lignocellulose particles G) [component G)] are mixed with

   H) from 1 to 15% by weight of one or more binders selected from the group consisting of aminoplastic resin and organic isocyanate having at least two isocyanate groups [component H)],
   I) from 0 to 2% by weight of ammonium salts [component I)],
   J) from 0 to 5% by weight of additives [component J)] and
   K) from 0.1 to 3% by weight of alkali metal salts or alkaline earth metal salts from the group of the sulfates, nitrates, halides and mixtures of these [component K)],

   where at the juncture Z the temperature of the layer of the core or of the single layer is at least 90°C, and this temperature is reached in less than 40 s/mm · d after the application of the high-frequency electrical field, where d is the thickness of the sheet of lignocellulose material in mm at the juncture Z.

2. The process for the production of single- or multilayer lignocellulose materials according to claim 1, wherein the process is carried out continuously.

3. The process for the production of single- or multilayer lignocellulose materials according to claim 1 or 2, wherein the process is used for the production of single-layer lignocellulose materials.

4. The process for the production of single- or multilayer lignocellulose materials according to any of claims 1 to 3, wherein the temperature of the layer of the core, or of the single layer, at the juncture Z is from 90 to 170°C.

5. The process for the production of multilayer or single-layer lignocellulose materials according to any of claims 1 to 4, wherein the lignocellulose material comprises, in the core or in the single layer, from 0.2 to 2.5% by weight of component F).

6. The process for the production of multilayer or single-layer lignocellulose materials according to any of claims 1 to 5, wherein the density of the lignocellulose material is from 100 to 700 kg/m$^3$, preferably from 150 to 490 kg/m$^3$, particularly preferably from 200 to 440 kg/m$^3$, in particular from 250 to 390 kg/m$^3$.

7. The process for the production of multilayer lignocellulose materials according to any of claims 1 to 6, wherein the following condition is met:

$$\text{component F)} \geq 1.1 \cdot \text{component K)}.$$

8. The process for the production of multilayer lignocellulose materials according to any of claims 1 to 7, wherein the following condition is met:

$$[\text{component F)} + \text{component D)}] \geq 1.1 \cdot [\text{component K)} + \text{component I)}].$$

9. The process for the production of multilayer lignocellulose materials according to any of claims 1 to 6 and 8, wherein the following condition is met:

$$\text{component F)} \leq 1.1 \cdot \text{component K)}.$$

10. The process for the production of multilayer lignocellulose materials according to any of claims 1 to 7 and 9, wherein the following condition is met:

$$[\text{component F)} + \text{component D)}] \leq 1.1 \cdot [\text{component K)} + \text{component I)}].$$

11. A single- or multilayer lignocellulose material produced by a process for the batchwise or continuous, preferably continuous production of single-layer lignocellulose-based boards or of multilayer lignocellulose-based boards with a core and with at least one upper and one lower outer layer according to claim 1 to 10, comprising the following steps:

a) mixing of the components of the individual layer(s),
b) layer-by-layer scattering of the mixtures,
c) compaction after the scattering of the individual layer(s),
d) application of a high-frequency electrical field during and/or after the compaction and thermal hardening of the binder(s),
e) then optionally hot pressing, and
f) cooling the lignocellulose material,

where, in step a),
for the core or the single layer, the lignocellulose particles A) [component A)] are mixed with

B) from 0 to 25% by weight of expanded plastics particles with bulk density in the range from 10 to 150 kg/m$^3$ [component B)],
C) from 1 to 15% by weight of one or more binders selected from the group consisting of aminoplastic resin and organic isocyanate having at least two isocyanate groups [component C)],
D) from 0 to 3% by weight of ammonium salts [component D)],
E) from 0 to 5% by weight of additives [component E)] and
F) from 0.1 to 3% by weight of alkali metal salts or alkaline earth metal salts from the group of the sulfates, nitrates, halides and mixtures of these [component F)],

and optionally for the outer layers, the lignocellulose particles G) [component G)] are mixed with

H) from 1 to 15% by weight of one or more binders selected from the group consisting of aminoplastic resin and organic isocyanate having at least two isocyanate groups [component H)],
I) from 0 to 2% by weight of ammonium salts [component I)],
J) from 0 to 5% by weight of additives [component J)] and
K) from 0.1 to 3% by weight of alkali metal salts or alkaline earth metal salts from the group of the sulfates, nitrates, halides and mixtures of these [component K)],

where at the juncture Z the temperature of the layer of the core or of the single layer is at least 90°C, and this temperature is reached in less than 40 s/mm · d after the application of the high-frequency electrical field, where d is the thickness of the sheet of lignocellulose material in mm at the juncture Z.

12. A single- or multilayer lignocellulose material with a core and optionally with at least one upper and one lower outer layer, where the core or the single layer comprises, based on the lignocellulose particles A) [component A)], the following components:

B) from 0 to 25% by weight of expanded plastics particles with bulk density in the range from 10 to 150 kg/m$^3$ [component B)],
C) from 1 to 15% by weight of one or more binders selected from the group consisting of aminoplastic resin and organic isocyanate having at least two isocyanate groups [component C)],
D) from 0 to 3% by weight of ammonium salts [component D)],
E) from 0 to 5% by weight of additives [component E)] and
F) from 0.1 to 3% by weight of alkali metal salts or alkaline earth metal salts from the group of the sulfates, nitrates, halides and mixtures of these [component F)],

and optionally for the outer layers, based on the lignocellulose particles G) [component G)], the following components:

H) from 1 to 15% by weight of one or more binders selected from the group consisting of aminoplastic resin and organic isocyanate having at least two isocyanate groups [component H)],
I) from 0 to 2% by weight of ammonium salts [component I)],
J) from 0 to 5% by weight of additives [component J)] and
K) from 0.1 to 3% by weight of alkali metal salts or alkaline earth metal salts from the group of the sulfates, nitrates, halides and mixtures of these [component K)].

13. A single- or multilayer lignocellulose material produced according to either of claims 11 and 12, wherein the lignocellulose material comprises, in the core or in the single layer, from 0.2 to 2.5% by weight of component F).

14. The multilayer lignocellulose material according to claims 11 to 13, wherein their density distribution perpendicularly to the plane of the board is almost homogeneous and the difference between density maximum in the outer layers and density minimum in the core is at most 100 kg/m$^3$.

15. The single-layer lignocellulose material according to claims 11 to 13, wherein their density distribution perpendicularly to the plane of the board is almost homogeneous and the difference between density maximum and density minimum in the single-layer lignocellulose material is at most 100 kg/cm$^3$.

16. The use of the single- or multilayer lignocellulose materials according to any of claims 11 to 15 or obtained by a process according to any of claims 1 to 10 in the construction industry, in the fitting-out of interiors, in shopfitting and construction of exhibition stands, as material for furniture or as packaging material.

17. The use of the single- or multilayer lignocellulose material according to any of claims 11 to 15 or obtained by a process according to any of claims 1 to 10 as inner ply for sandwich boards.

18. The use of a single- or multilayer lignocellulose material according to any of claims 1 to 15 and the sandwich board according to claim 17 as roof paneling or wall paneling, infill, shuttering, floors, door inlays, partitions or shelving or as support material for unit furniture, as door material, as worktop, as kitchen front, as outer layers in sandwich structures, or as elements in tables, chairs, and upholstered furniture.

**Revendications**

1. Procédé de fabrication discontinue ou continue de matériaux lignocellulosiques monocouches en forme de plaques ou de matériaux lignocellulosiques multicouches en forme de plaques comprenant un noyau et au moins une couche de recouvrement supérieure et une couche de recouvrement inférieure, contenant les étapes de procédé suivantes :

a) le mélange des composants de la ou des couches individuelles,
b) la distribution en couches des mélanges pour former un mat,
c) le compactage après la distribution de la ou des couches individuelles,

d) l'application d'un champ électrique de fréquence élevée pendant et/ou après le compactage et le durcissement thermique du ou des liants, puis
e) éventuellement la compression à chaud, et
f) le refroidissement du matériau lignocellulosique, à l'étape de procédé a),

pour le noyau ou la couche unique, les particules lignocellulosiques A) [composant A)] étant mélangées avec

B) 0 à 25 % en poids de particules de matière plastique expansées ayant une densité apparente dans la plage allant de 10 à 150 kg/m$^3$ [composant B)],
C) 1 à 15 % en poids d'un ou de plusieurs liants choisis dans le groupe constitué par une résine aminoplaste et un isocyanate organique contenant au moins deux groupes isocyanate [composant C)],
D) 0 à 3 % en poids de sels d'ammonium [composant D)],
E) 0 à 5 % en poids d'additifs [composant E)], et
F) 0,1 à 3 % en poids de sels alcalins ou alcalino-terreux du groupe constitué par les sulfates, les nitrates, les halogénures ou leur mélange [composant F)],

éventuellement pour les couches de recouvrement, les particules lignocellulosiques G) [composant G)] étant mélangées avec

H) 1 à 15 % en poids d'un ou de plusieurs liants choisis dans le groupe constitué par une résine aminoplaste et un isocyanate organique contenant au moins deux groupes isocyanate [composant H],
I) 0 à 2 % en poids de sels d'ammonium [composant I)],
J) 0 à 5 % en poids d'additifs [composant J)], et
K) 0,1 à 3 % en poids de sels alcalins ou alcalino-terreux du groupe constitué par les sulfates, les nitrates, les halogénures ou leur mélange [composant K)],

au moment Z, la couche du noyau ou la couche unique présentant une température d'au moins 90 °C et cette température étant atteinte en moins de 40 s/mm·d à partir de l'application du champ électrique de fréquence élevée, d étant l'épaisseur du matériau lignocellulosique en forme de plaque en mm au moment Z.

2. Procédé de fabrication de matériaux lignocellulosiques mono- ou multicouches selon la revendication 1, **caractérisé en ce que** le procédé est réalisé en continu.

3. Procédé de fabrication de matériaux lignocellulosiques mono- ou multicouches selon l'une quelconque des revendications 1 ou 2, **caractérisé en ce que** le procédé est utilisé pour la fabrication de matériaux lignocellulosiques monocouches.

4. Procédé de fabrication de matériaux lignocellulosiques mono- ou multicouches selon l'une quelconque des revendications 1 à 3, **caractérisé en ce qu'**au moment Z, la couche du noyau ou la couche unique présente une température de 90 à 170 °C.

5. Procédé de fabrication de matériaux lignocellulosiques mono- ou multicouches selon l'une quelconque des revendications 1 à 4, **caractérisé en ce que** les matériaux lignocellulosiques contiennent 0,2 à 2,5 % en poids du composant F) dans le noyau ou dans la couche unique.

6. Procédé de fabrication de matériaux lignocellulosiques mono- ou multicouches selon l'une quelconque des revendications 1 à 5, **caractérisé en ce que** les matériaux lignocellulosiques présentent une densité de 100 à 700 kg/m$^3$, de préférence de 150 à 490 kg/m$^3$, de manière particulièrement préférée de 200 à 440 kg/m$^3$, notamment de 250 à 390 kg/m$^3$.

7. Procédé de fabrication de matériaux lignocellulosiques multicouches selon l'une quelconque des revendications 1 à 6, **caractérisé en ce que** la condition composant F) ≥ 1,1 · composant K) est satisfaite.

8. Procédé de fabrication de matériaux lignocellulosiques multicouches selon l'une quelconque des revendications 1 à 7, **caractérisé en ce que** la condition [composant F) + composant D)] ≥ 1,1 [composant K) + composant I)] est satisfaite.

9. Procédé de fabrication de matériaux lignocellulosiques multicouches selon l'une quelconque des revendications 1 à 6 et 8, **caractérisé en ce que** la condition composant F) ≤ 1,1 · composant K) est satisfaite.

10. Procédé de fabrication de matériaux lignocellulosiques multicouches selon l'une quelconque des revendications 1 à 7 et 9, **caractérisé en ce que** la condition [composant F) + composant D)] ≤ 1,1 [composant K) + composant I)] est satisfaite.

11. Matériaux lignocellulosiques mono- ou multicouches, fabriqués par un procédé de fabrication discontinue ou continue, de préférence continue, de matériaux lignocellulosiques monocouches en forme de plaques ou de matériaux lignocellulosiques multicouches en forme de plaques comprenant un noyau et au moins une couche de recouvrement supérieure et une couche de recouvrement inférieure selon les revendications 1 à 10, contenant les étapes de procédé suivantes :

    a) le mélange des composants de la ou des couches individuelles,
    b) la distribution en couches des mélanges pour former un mat,
    c) le compactage après la distribution de la ou des couches individuelles,
    d) l'application d'un champ électrique de fréquence élevée pendant et/ou après le compactage et le durcissement thermique du ou des liants, puis
    e) éventuellement la compression à chaud, et
    f) le refroidissement du matériau lignocellulosique,

    à l'étape de procédé a),
    pour le noyau ou la couche unique, les particules lignocellulosiques A) [composant A)] étant mélangées avec

    B) 0 à 25 % en poids de particules de matière plastique expansées ayant une densité apparente dans la plage allant de 10 à 150 kg/m$^3$ [composant B)],
    C) 1 à 15 % en poids d'un ou de plusieurs liants choisis dans le groupe constitué par une résine aminoplaste et un isocyanate organique contenant au moins deux groupes isocyanate [composant C)],
    D) 0 à 3 % en poids de sels d'ammonium [composant D)],
    E) 0 à 5 % en poids d'additifs [composant E)], et
    F) 0,1 à 3 % en poids de sels alcalins ou alcalino-terreux du groupe constitué par les sulfates, les nitrates, les halogénures ou leur mélange [composant F)],

    éventuellement pour les couches de recouvrement, les particules lignocellulosiques G) [composant G)] étant mélangées avec

    H) 1 à 15 % en poids d'un ou de plusieurs liants choisis dans le groupe constitué par une résine aminoplaste et un isocyanate organique contenant au moins deux groupes isocyanate [composant H],
    I) 0 à 2 % en poids de sels d'ammonium [composant I)],
    J) 0 à 5 % en poids d'additifs [composant J)], et
    K) 0,1 à 3 % en poids de sels alcalins ou alcalino-terreux du groupe constitué par les sulfates, les nitrates, les halogénures ou leur mélange [composant K)],

    au moment Z, la couche du noyau ou la couche unique présentant une température de plus de 90 °C et cette température étant atteinte en moins de 40 s/mm·d à partir de l'application du champ électrique de fréquence élevée, d étant l'épaisseur du matériau lignocellulosique en forme de plaque en mm au moment Z.

12. Matériaux lignocellulosiques mono- ou multicouches comprenant un noyau et éventuellement au moins une couche de recouvrement supérieure et une couche de recouvrement inférieure, dans lesquels le noyau ou la couche unique contient, par rapport aux particules lignocellulosiques A) [composant A)], les composants suivants :

    B) 0 à 25 % en poids de particules de matière plastique expansées ayant une densité apparente dans la plage allant de 10 à 150 kg/m$^3$ [composant B)],
    C) 1 à 15 % en poids d'un ou de plusieurs liants choisis dans le groupe constitué par une résine aminoplaste et un isocyanate organique contenant au moins deux groupes isocyanate [composant C)],
    D) 0 à 3 % en poids de sels d'ammonium [composant D)],
    E) 0 à 5 % en poids d'additifs [composant E)], et
    F) 0,1 à 3 % en poids de sels alcalins ou alcalino-terreux du groupe constitué par les sulfates, les nitrates, les halogénures ou leur mélange [composant F)],

et éventuellement pour les couches de recouvrement, par rapport aux particules lignocellulosiques G) [composant G)], les composants suivants :

H) 1 à 15 % en poids d'un ou de plusieurs liants choisis dans le groupe constitué par une résine aminoplaste et un isocyanate organique contenant au moins deux groupes isocyanate [composant H],

I) 0 à 2 % en poids de sels d'ammonium [composant I)],

J) 0 à 5 % en poids d'additifs [composant J)], et

K) 0,1 à 3 % en poids de sels alcalins ou alcalino-terreux du groupe constitué par les sulfates, les nitrates, les halogénures ou leur mélange [composant K)].

13. Matériaux lignocellulosiques mono- ou multicouches selon l'une quelconque des revendications 11 ou 12, **caractérisés en ce que** les matériaux lignocellulosiques contiennent 0,2 à 2,5 % en poids du composant F) dans le noyau ou dans la couche unique.

14. Matériaux lignocellulosiques multicouches selon les revendications 11 à 13, **caractérisés en ce qu'**ils présentent une distribution de densité presque homogène perpendiculairement au plan des plaques, et la différence entre la densité maximale dans les couches de recouvrement et la densité minimale dans le noyau est d'au plus 100 kg/m$^3$.

15. Matériaux lignocellulosiques monocouches selon les revendications 11 à 13, **caractérisés en ce qu'**ils présentent une distribution de densité presque homogène perpendiculairement au plan des plaques, et la différence entre la densité maximale et la densité minimale dans le matériau lignocellulosique monocouche est d'au plus 100 kg/m$^3$.

16. Utilisation des matériaux lignocellulosiques mono- et multicouches selon l'une quelconque des revendications 11 à 15 ou obtenus par un procédé selon l'une quelconque des revendications 1 à 10 dans le bâtiment, dans l'aménagement intérieur, dans la construction de magasins et de stands, en tant que matériau pour meubles ou en tant que matériau d'emballage.

17. Utilisation des matériaux lignocellulosiques mono- ou multicouches selon l'une quelconque des revendications 11 à 15 ou obtenus par un procédé selon l'une quelconque des revendications 1 à 10 en tant que couche intérieure pour des plaques en sandwich.

18. Utilisation des matériaux lignocellulosiques mono- et multicouches selon l'une quelconque des revendications 1 à 15 et de la plaque en sandwich selon la revendication 17 en tant que panneaux de toits et de murs, remplissages, coques, planchers, couches intérieures de portes, parois de séparation, étagères ou en tant que matériau support pour meubles de rangement, en tant qu'étagère, en tant que matériau de porte, en tant que plan de travail, en tant que façade de cuisine, en tant que couches de recouvrement dans des constructions en sandwich, en tant qu'éléments dans des tables, des sièges et des meubles rembourrés.

**EP 3 230 028 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 9728936 A
- DE 3107589 C
- DE 2908470 C
- DE 3107592 A
- DE 10315922 A1
- US 5112875 A

**In der Beschreibung aufgeführte Nicht-Patentliteratur**

- **ZEPPENFELD ; GRUNWALD.** Klebstoffe in der Holz -und Möbelindustrie. DRW Verlag, 2005, 286
- **A. WAGENFÜHR ; F. SCHOLZ.** Taschenbuch der Holztechnik. Carl Hanser Verlag, 2012, 84
- **M. DUNKY ; P. NIEMZ.** Holzwerkstoffe und Leime. Springer Verlag, 2002, 119-121
- **H.-J. DEPPE ; K. ERNST.** Taschenbuch der Spanplatten Technik. DRW - Verlag Weinbrenner, 2000, 232-254
- **H.-J. DEPPE ; K. ERNST.** MDF- Mitteldichte Faserplatten. DRW- Verlag Weinbrenner, 1996, 93-104
- **M. DUNKY ; P. NIEMZ.** Holzwerkstoffe und Leime. Springer Verlag, 2002, 868-869
- **M. DUNKY ; P. NIEMZ.** Holzwerkstoffe und Leime. Springer Verlag, 2002, 91-156
- Polystyrol. Kunststoff Handbuch 1996. Hanser, 1996, vol. 4, 640-673
- Electronic Release. Ullmann's Encyclopedia. 2000
- Polystyrol. Kunststoff-Handbuch. 1996, vol. 4, 567-598
- **GÜNTER ZEPPENFELD ; DIRK GRUNWALD.** Klebstoffe in der Holz- und Möbelindustrie. DRW-Verlag, 268
- Aminoplaste. Ullmanns Enzyklopädie der technischen Chemie. Verlag Chemie, 1973, vol. 4, 403-424
- Ullmann's Encyclopedia of Industrial Chemistry. VCH Verlagsgesellschaft, 1985, vol. A2, 115-141
- Amino Resins. **M. DUNKY ; P. NIEMZ.** Holzwerkstoffe und Leime. Springer, 2002, 251-259
- Polyurethane. **BECKER/BRAUN.** Kunststoff Handbuch. Hanser, 1993, vol. 7, 17-21, 76-88, 665-671
- Polyurethane. **BECKER/BRAUN.** Kunststoff Handbuch. Hanser, 1993, vol. 7, 18